# EUROPEAN PATENT APPLICATION

(11) **EP 3 646 941 A2**
(43) Date of publication of application: **06.05.2020**
(21) Application number: 19202747.2
(22) Date of filing: 11.10.2019
(51) Int. Cl.: B01F 3/08, B01F 13/00, C08K 5/00, C08L 23/22, C08L 91/00, B01F 17/00

(54) **METHOD FOR PRODUCING EMULSIONS AND AQUEOUS POLYISOBUTENE EMULSION**

(30) Priority: 11.10.2018 EP 18199801
(71) Applicant: Emulco Laboratories C.V.B.A., 9000 Gent (BE)
(72) Inventor: Van Hooghten, Rob, 9000 Gent (BE); Hofman, Martin, 8093 Zürich (CH); Vermant, Jan, 8093 Zürich (CH)
(74) Representative: Brantsandpatents bvba

(57) **Abstract**

The current invention concerns a method for preparing a polyisobutene (PiB) in water emulsion characterized by the steps :

- combining a number of separate fluid streams of PiB and water with formation of alternating fluid lamellae of PiB and water,

- focusing the alternating fluid lamellae of PiB and water with formation of a focused total fluid stream,

- gradually tapering the cross-flow section of said focused total fluid stream in the direction of the flow in a manner that decays said alternating polyisobutene and water fluid lamellae.

The current invention relates to a method for producing dispersions. The current invention also concerns the emulsions produced by said method. The current method also relates to polymer emulsions, particularly polyisobutene emulsions with a high content of polyisobutene.

The current method also relates to a method for reducing the average droplet diameter of an emulsion, comprising the steps :

- providing an emulsion, comprising droplets of a dispersed phase within a continuous phase, characterized by an average droplet diameter and a viscosity ratio of the dispersed phase to said continuous phase of at least 4.0, and

- reducing said average droplet diameter by forcing said emulsion through a gradually tapered cross-flow section of in the direction of the flow in a manner that decays said alternating polyisobutene and water fluid lamellae.

## Description

### Technical field

The invention pertains to the technical field of methods for preparing emulsions. More specifically, the present invention relates to a new method for producing emulsions. The present invention also relates to a method to produce dispersions. Furthermore, the invention relates to the emulsions produced by said method. Lastly, the present invention also relates to emulsions of polyisobutene.

### Background

Viscous materials, especially viscous polymers, are interesting candidates for applications such as coatings, sealants, adhesives and roofing. Due to their high viscosity, these materials are difficult to handle. To improve their handling, emulsions of said materials have been proposed. Especially aqueous emulsions are of high interest since the absence of organic solvents broadens the scope of applicability in an eco-friendly manner.

The preparation of emulsions of any liquid materials, including viscous materials, is a challenging task. Various approaches have been reported in the state of the art.

WO 2014/012888, directed to methods for preparing aqueous polyisobutene emulsions, discloses methods for preparing a stable and thin liquid polyisobutene emulsion comprising the steps of i) heating a polyisobutene polymer, optionally mixing said polyisobutene polymer with a wax and/or oil, thereby obtaining a premix, ii) mixing said pre-mix in water containing one or more surfactants in a concentration of the surfactants of maximum 5 wt.% at a controlled flow rate, which flow rate is sufficiently slow to form particles of the pre-mix, thereby obtaining a pre-emulsion, and iii) homogenising said pre-emulsion, thereby obtaining said polyisobutene emulsion with an average particle size of maximum 100 µm. The reported method provides an easy-to-handle, non-tacky, aqueous polyisobutene emulsion.

WO 03/006533 discloses water-continuous emulsions of elastomeric polymers, having a solids content of greater than 75 %, an average particle size less than 5 µm, and having sufficient stability to produce a stable lower solids emulsion upon dilution with water comprising; an elastomeric polymer, surfactant, water, optional plasticizer, optional low molecular weight acid, and is essentially free of organic solvents. The water-continuous emulsions of elastomeric polymers can be prepared by catastrophic phase inversion by (i) forming a premix that is essentially free of organic solvents comprising an elastomeric polymer and stabilizer, and optionally a plasticizer and low molecular weight acid, and (ii) adding water to the premix with mixing to form a water continuous emulsion of the elastomeric polymer having a solids content of greater than 75 %, an average particle size less than 5 µm, and having sufficient stability to produce a stable lower solids emulsion upon dilution with water.

Feasible preparation methods require processing conditions that yield emulsions with good handling properties and stability, while allowing for optimal use of materials and energy. In this regard, a reduced use of stabilizers or emulsifiers is especially advantageous. Also, high solids content emulsions are especially desirable since they limit the total weight of the composition, which is i.e. beneficial during transportation. The present invention aims to provide improved methods for preparing such emulsions.

US 2004/027915 discloses a procedure for mixing at least two liquids comprising the following steps : a plurality of separated fluid currents of both fluids are brought together and alternately adjacent fluid lamellae of both fluids are formed: the combined fluid currents are carried away and a focused total fluid current is formed; the focused total fluid current is fed as fluid jet into an expansion chamber; and the resulting mixture is drawn off.

WO 03/068381 discloses a method and a device for producing monodispersed nanodrops. The method is characterized in that an immiscible second fluid B is introduced into a continuously flowing fluid A, fluid B is surrounded by fluid A, and the flow cross-section (16, 25) of fluid B diminishes in the direction of flow (2) in such a way that fluid B disintegrates into individual drops (26) as a result of its hydrodynamic instability

DE 199 17 156 discloses a process for producing a water-in-diesel oil emulsion as a fuel, comprising the steps of: splitting a water-flow of liquid into spatially separated fluid lamellae water a width of <100 microns and passing the water fluid lamellae in at least one diesel-liquid stream, wherein a fragmentation of the water-fluid lamellae takes place in water droplets.

WO 2013/165908 discloses a fluid micro-mixer apparatus, which includes a plurality of first microchannels for receiving a first fluid and a plurality of second microchannels for receiving a second fluid. A mixing chamber flow path is disposed to receive the first and second fluids after the first and second fluids exit their respective output ports.

WO 2014/012884 discloses stable emulsions of polyisobutene and their use. WO 2014/012884 discloses polyisobutene compositions with a solid content up to 63.13 wt.%. Stable emulsions of polyisobutene with a higher solid content are desirable.

### Summary of the invention

The present invention provides a method for preparing an emulsion comprising the steps :
- mixing a first phase and a second phase in a layer multiplier to produce a multilayered fluid structure, and
- collapsing said multilayered fluid structure, thereby dispersing the second phase in the first phase creating an emulsion.

Compared to mechanical mixers, which require a lot of energy for viscous substances, the present invention has lower energy requirements and operational costs. Furthermore, the particle size of the dispersed phase can be controlled to some extent through the dimensions of the multilayered structure before collapsing. This will be referred to as "geometric" control of the particle size.

The method can also operate continuously, unlike mechanical stirring or using kneaders which is a batch process. Lastly, the amount of stabilizer required to form the emulsion can be drastically reduced.

Without being bound to theory, there is a low-stabilizer regime and a high-stabilizer regime. In the low-stabilizer regime, there is insufficient stabilizer present in the emulsion. The particle size of the emulsion is linked to the amount of stabilizer which is added. In the high-stabilizer regime, there is sufficient stabilizer and adding more stabilizer will not lead to smaller droplets. In the high-stabilizer regime, increasing the mixing energy tends to result in a smaller particle size in the emulsion. The current invention lowers energy requirements in both regimes, and can reduce the amount of stabilizer required in the high-stabilizer regimes.

In a second aspect, the present invention relates to a method for preparing a dispersion comprising the following steps :
- preparing an emulsion from a first liquid phase and a second liquid phase by the method according the first aspect, and
- cooling said emulsion to a temperature below a melting temperature Tₘ at least one of said first liquid phase and said second liquid phase, thereby creating at least one solid phase.

This is an alternative method to produce dispersions such as suspensions. Furthermore, it gives additional control over the particle size for dispersions. Certain difficult to produce dispersions can be produced by this method.

In a third aspect, the present invention relates to an emulsion produced by the method according to the first aspect.

These emulsions can contain significantly less stabilizer. This is advantageous as stabilizer is generally expensive. Furthermore, for many applications the stabilizer is not desired. Furthermore, these emulsions can comprise more viscous liquids which were difficult to disperse through previous methods. Lastly, these emulsions can be considerably cheaper as they're created through a more energy and material-efficient method, which can be fully continuous.

In a fourth aspect, the present invention relates to an aqueous polyisobutene emulsion comprising :
- 60 wt.% to 95 wt.%, based on the total weight of said emulsion, of polyisobutene,
- at maximum 5 wt.%, based on the total weight of said emulsion based on the total weight of said emulsion, of at least one surfactant, and
- optionally 1 wt.% to 30 wt.% , based on the total weight of said emulsion, of at least one wax and/or oil,
complemented with water to 100 wt. %, wherein the average particle size of said polyisobutene emulsion is not greater than 100 µm.

Aqueous emulsions comprising polyisobutene were previously limited to lower amounts of polyisobutene in order to obtain an emulsion with a particle size smaller than 100 µm. A higher polyisobutene content is desirable as less dispersion medium is required which is both economic and ecological. Furthermore, less dispersion medium needs to be stored, transported and transferred.

### Description of figures

**Figure 1** displays schematically an embodiment of flow division employed to create a multi-layered structure according to the method of the present invention.
**Figure 2** displays schematically an embodiment of collapsing a multi-layered structure into an emulsion according to present invention.
**Figure 3** shows an embodiment of modular plates from which a static mixer suitable for flow division suitable to create a multi-layered structure according to the present invention can be created.
**Figure 4** shows an embodiment of modular plates suitable to collapse a multi-layered structure through step-emulsification according to the present invention.
**Figure 5** shows an embodiment of modular plates suitable to create elongational flow, in order to collapse a multi-layered structure according to the present invention.

### Detailed description of the invention

The present invention concerns a method for preparing an emulsion.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.
"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight", "weight percent", "wt.%" or "wt.%", here and throughout the description unless otherwise defined, refers to the relative weight of the respective component based on the overall weight of the formulation. More specifically, it refers to the weight of a component to the total weight of the emulsion.

A "stable" emulsion is to be understood as an emulsion wherein the properties, including the amount of droplets and the diameter, does not change significantly over a period of time. In practise, the stability of an emulsion relates to its application. For some applications such as coatings, the period of time can be short and changing emulsion properties may be desirable. For other applications, a long shelf-life is desired. Preferably, the properties of the emulsion also do not change after a relatively small change in conditions, such as temperature, either.

The process by which an emulsion completely breaks (coalescence), i.e., the system separates into bulk oil and water phases, is generally considered to be governed by two different droplet loss mechanisms, i.e., coalescence and disproportionation. Coalescence is a process that involves the collision of two or more droplets which subsequently fuse to one droplet. The collision between the droplets is caused by diffusion or an external field, in general a gravitational or flow field. However electric and magnetic fields can also be used to induce coalescence in emulsions. Disproportionation is a process, often referred to as Ostwald ripening, that is dependent on the diffusion of the dispersed phase molecules from smaller to larger droplets through the continuous phase. Both coalescence and disproportionation processes in an emulsion can be aggravated by destabilizing mechanisms which do not involve an increase in particle size : flocculation, aggregation and creaming-sedimentation. Creaming is not an actual breaking but a separation of the emulsion into two emulsions, one of which (the cream) is richer in the disperse phase than the other. Creaming is the principal process by which the disperse phase separates from an emulsion and is typically the precursor to coalescence. "Flocculation" can be generally defined as the aggregation of droplets to give 3-D clusters without coalescence occurring. Importantly, all droplets maintain their own integrity and remain as totally separate entities. It results when there is a weak, net attraction between droplets and arises through various mechanisms. "Flocculation" may be subdivided for convenience into two general categories: that resulting from sedimentation aggregation and that from Brownian motion aggregation of the droplets. In polydisperse emulsions, droplets of different size cream at different rates and this leads to a tendency for the faster-moving (larger) droplets to collide with and potentially trap, slower moving smaller droplets. In sedimentation aggregation it is assumed that all the paths in sedimentation are vertically linear; Brownian aggregation is the result of random Brownian movement of the droplets. In both cases a frequency factor for sedimentation encounters can be defined. The measurement of both the particle size and the size distribution of emulsions is a metric. A variety of sizing techniques are available.

The term "mechanically agitation" is to be understood as a process step whereby a mechanical force is applied to a material or composition, such as, but not limiting to, stirring, mixing, kneading and/or extruding.

The term "static mixing" is to be understood as the continuous mixing of fluid materials, without moving components, by allowing said liquid materials to flow through a predefined structure. The energy needed for mixing comes from a loss in pressure as fluids flow through the static mixer. Common designs are plate-type mixers and cylindrical (tube) type mixers.

In this text, "static mixing" relates to "flow division". Flow division is understood as static mixing in a laminar flow regime, wherein a processed material divides at the leading edge of each element of the mixer and follows the channels created by the element shape. At each succeeding element, the two channels are further divided, resulting in an exponential increase in stratification. It's this flow division that leads to a regular, well-defined multi-layered structure. A static mixer according to the present invention thus refers to a "layer-multiplier".

"Static mixing" as used in this text does not refer to "radial mixing". Radial mixing utilizes either turbulent flow or laminar flow. It comprises rotational circulation of a processed material around its own hydraulic center in each channel of the mixer, which causes radial mixing of the material. Radial mixing which does not lead to a multi-layered structure, and as a result is not suitable to create a multi-layered structure as per the method in the present invention. Radial mixing can however be used to collapse a multi-layered structure formed by flow division into an emulsion. If "radial mixing" is meant, then this term will be used.

A "dispersion" is a system in which discrete particles of one material are dispersed in a continuous phase of another material. The two phases may be in the same or different states of matter. They are different than solutions, where dissolved molecules do not form a separate phase from the solute.

An "emulsion" is a dispersion of two or more liquids that are normally immiscible. The term emulsion refers to a dispersion where both phases, dispersed and continuous, are liquids. In an emulsion, one liquid (the dispersed phase) is dispersed in the other (the continuous phase). Emulsions, being liquids, do not exhibit a static internal structure. Two liquids can form different types of emulsions. As an example, oil and water can form, first, an oil-in-water (O/W) emulsion, wherein the oil is the dispersed phase, and water is the dispersion medium. Second, they can form a water-in-oil (W/O) emulsion, wherein water is the dispersed phase and oil is the external phase. Multiple emulsions are also possible, including a "water-in-oil-in-water (W/O/W)" emulsion and an "oil-in-water-in-oil (O/W/O)" emulsion.

A "suspension" or "sol" is a dispersion comprising a dispersed solid phase in a continuous liquid phase. In chemistry, a difference is made between a suspension and a sol based on particle size or thermodynamic stability of the dispersion. However, for the present invention the terms "suspension" and "sol" will be used interchangeably and refer to any dispersion of a solid phase within a continuous liquid phase, regardless of particle size or thermodynamic stability.

A "solid sol" is a dispersion comprising a dispersed solid phase in a continuous solid phase.

The term "particle size" is used as a generic term for both the size of solid particles in dispersion and the size of liquid droplets in emulsion. The term "average particle size" is also to be understood as the term "mean particle size".

"Phase inversion" is a process in which the structure of an emulsion inverts, i.e. when the continuous phase becomes the dispersed phase and vice versa. This can be achieved by a change of any variable such as the temperature, pressure, salinity, use of stabilizers or surfactants or the proportion of oil and water.

"Catastrophic phase inversion" is a phase inversion process where the inversion is achieved by a change in the ratio of water to oil quantities. E.g. a water-in-oil emulsion can be inverted to an oil-in-water emulsion by the addition of extra water.

"Elongational" and "extensional" flow is a flow regime in which a unit cell is extended or elongated as a result of tension. The component of stress on said fluid unit cell is in the same direction as the fluid flow.

In the first aspect, the present invention relates to a method for preparing an emulsion comprising the steps :
- mixing a first phase and a second phase in a layer multiplier to produce a multilayered fluid structure, and
- collapsing said multilayered fluid structure, thereby dispersing the second phase in the first phase creating an emulsion.

The working principle of the first aspect of the invention will be explained in detail.

The first step according to creating an emulsion according to the present invention comprises the production of a multi-layered fluid structure comprising an first and a second phase. These phases need to be immiscible, that is to say remain separate liquid phases.

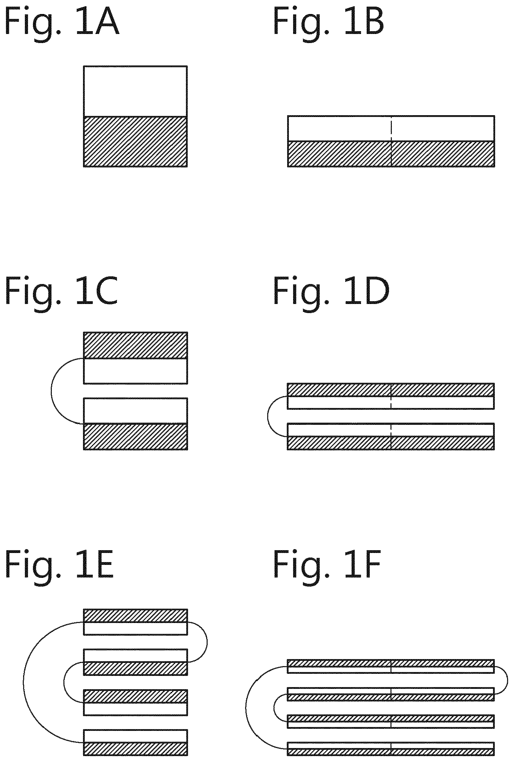

In figure 1, the principle of flow division on two immiscible liquids flowing through a static mixer is shown. In the static mixer, both the first and second phase are combined, stretched and consequently folded, stacked or otherwise recombined so that more layers are formed. These layers can again be stretched and recombined so each pass through the static mixer multiplies the amount of layers in the multi-layered structure.

The generated multi-layered structure is consequently collapsed into an emulsion. This can be done through various methods. One of the embodiments according to the present invention is inserting the target dispersion medium perpendicular to the multi-layered structure. This embodiment will, as example, be described in detail to explain the working principle of the method according to the first aspect of the invention. The addition of the target dispersion medium can be considered a modified catastrophic phase inversion process. Catastrophic phase inversion as such is also useful to prepare emulsions in for example a batch process as shown in examples 5-12.

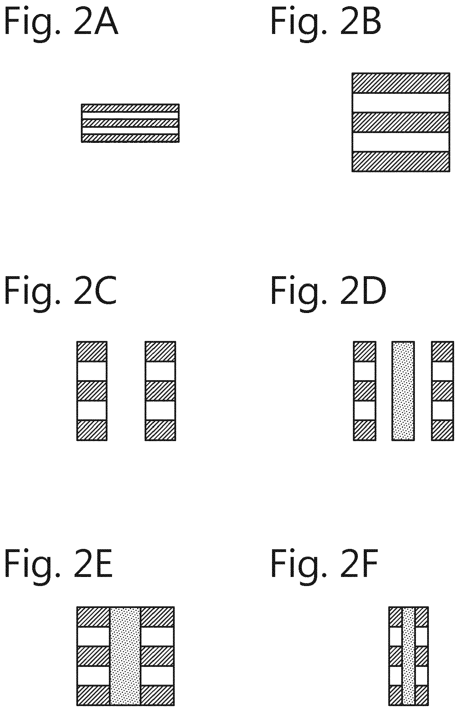

Collapsing a multi-layered structure to an emulsion is shown in figure 2A-2F. In figure 2A, a multi-layered structure is provided. This structure can be stretched as desired. In figure 2C, the multi-layered structure is split perpendicular to the layers of the multi-layered structure. In figure 2D, the target dispersion medium is inserted as monolayer, perpendicular to the layers of the multi-layered structure. When these are recombined as seen in figure 2E, what remains is no longer a multi-layered structure, but instead liquid threads of the to be dispersed phase are formed. The shape of which will confirm to the geometry of the container in which it is contained and / or through which it flows, such as shown in figure 2F. Liquid threads are in general unstable and tend to destabilize in droplets by a Plateau-Rayleigh instability. This destabilization process can be assisted by multiplying the structure in Figure 2F in a layer multiplier.
but instead a dispersion of liquid droplets in a liquid dispersion medium, which is an emulsion. The shape of the emulsion will confirm to the geometry of the container in which it is contained and/or through which it flows, such as shown in Fig. 2F.

In a preferred embodiment, the static mixer is a layer multiplier suitable for generating a high-viscosity multi-layered structure. Such static mixers are known in the prior art. In a more preferred embodiment, the static mixer is the layer multiplier disclosed in US 9.636.646. It comprises an inlet for a flow of multilayered flowable material, a distribution manifold into which the inlet debouches, a number >2 of separate splitting channels extending from the distribution manifold, a recombination manifold into which the splitting channels debouch, an outlet in one end of the recombination manifold, and the distribution manifold is arranged in an opposing relationship with the recombination manifold.

In one embodiment there are >2, such as 3, 4, 5, 6, 7, 8, 9, 10 or more separate splitting channels extending between each distribution manifold and the corresponding recombination manifold. In one or several embodiments there are 4-8 splitting channels per pair of distribution manifold/recombination manifold.

In one embodiment the layer multiplier has an overall curved shape with the inlet and the outlet respectively arranged radially inside of the splitting channels. This arrangement is space efficient in that the larger number of splitting channels may be arranged along the circumference of the layer multiplier and that the space available in the middle may be utilized for inlet(s) and outlet(s). It also facilitates stacking of several layer multipliers, one on top of the other, in a natural fashion.

In one embodiment it has proven to be beneficial for the multiplier to comprise two identical halves arranged in a 180° relationship, each half comprising a distribution chamber, splitting channels, and a recombination chamber. Using two identical halves basically cuts the average path length for a flow path through the layer multiplier in half. This shortens residence times and reduces the pressure drop. The output from each of the halves is preferably combined (stacked) before the multi-layered structure enters a consecutive multiplying step.

In one embodiment, the shape of the recombination chamber corresponds to the shape of the distribution chamber, preferably such that there shapes are identical. This offers a predictable behaviour of the layer multiplier and facilitates balancing of the system. The feature obviously also has advantages from a manufacturing standpoint. In one or more embodiments the total number of splitting channels corresponds to 2-20, such as 4, 8, 12, 16 or 20, implying 2, 4, 6, 8 or 10 per distribution channel in the recently mentioned embodiment.

In one embodiment, the layer-multiplier or static mixer also relates to a layer-multiplier assembly, comprising several layer multipliers of any preceding or later embodiment arranged on top of each other, optionally provided with a coupling element there between. In some embodiments the adjacent layer multipliers in the assembly may be rotated 90°, which simplifies coupling in relation to the orientation of the multilayer structure processed in the assembly.

Formation of a well-defined multi-layered fluid structure allows "geometric" control of the particle size. As long as the droplets are stable, the particle size can be chosen independent of the amount of stabilizer. In the methods according to the prior art, these parameters are frequently linked, particularly in low stabilizer regimes. That is to say, in low stabilizer regimes the amount of stabilizer determines the particle size, and adding more stabilizer would generally reduce the particle size. In high-stabilizer regimes, the particle size would be determined by the energy-input. This remains true for present invention, however the energy input can more easily be measured and estimated through the amount of splitters used. This allows "geometric" control of the particle size.

In a preferred embodiment of the present invention, the method is a continuous method, rather than a batch process. The speed for producing emulsions of viscous phases is improved, as static mixers are generally faster than mechanical mixers. The present invention also allows for the production of emulsions continuously, rather than as a batch process. Furthermore, smaller droplet diameters can be produced. Additionally, a more narrow particle size distribution can be produced by controlled collapse of the multi-layered fluid structure.

In an embodiment, said first phase and said second phase comprise an aqueous and a non-aqueous phase, or a "water" and an "oil" phase. Herein, the water or aqueous phase is not necessarily H₂O, but rather the more polar of the two phases.

In a preferred embodiment, said first and/or said second phase comprise an emulsion. This is advantageous as it shows the method can easily be adapted for more complex multiphase systems. For example, O/W/O emulsions can be created by first producing an O/W emulsion, either through the method according to the present invention or through other methods, and then using said O/W emulsion as one phase, along with another oil phase, to create an O/W/O emulsion according to the first aspect of the invention. Similarly, W/O/W emulsions can be created from an aqueous phase and an W/O emulsion. This is advantageous over other methods where such simple extensions to multiphase systems cannot be made in a general sense. In another preferred embodiment, said first and/or second phase comprise a suspension or any other phase which is sufficiently fluid to be subjected to flow division, resulting in a multi-layered structure.

In a preferred embodiment, a single layer of said multi-layered structure has a thickness lower than 100 µm before collapsing, preferably an thickness lower than 50 µm, more preferably an thickness lower than 10 µm, more preferably an thickness lower than 5 µm, more preferably an thickness lower than 3 µm, more preferably an average thickness lower than 1 µm. Multi-layered structures with a thickness lower than 0.5 µm generally were unstable, and would collapse quickly. The collapse often did not result in emulsions, but rather multi-layered structures with layer thickness which remained stable.

The thickness of the layers described herein is the theoretical thickness, which can be calculated from the flow rate of the first or second phase and the number of flow divisions.

In a preferred embodiment, the emulsion comprises stabilizer. The stabilizer can be added to the first or the second phase. In a preferred embodiment, the stabilizer comprises a lipophilic end and a hydrophilic end. In a more preferred embodiment, the hydrophilic end is added to the more polar phase, and the lipophilic end is added to the less polar phase. Upon contact between both phases, the stabilizer is formed by reaction between the hydrophilic and lipophilic ends forming a surface-active stabilizer. with both aqueous end and non-aqueous end. This reaction speeds up as the surface between the first and second phase increases, which occurs while the multilayer is formed as the amount of layers multiplies and when said multilayer is collapsed into an emulsion.

In a preferred embodiment, the amount of stabilizer in the emulsion is less than 5% by weight, preferably less than 4%, more preferably less than 3%, more preferably less than 2%. In order to obtain sufficient shelf-life, 1 wt.% stabilizer is generally required. For applications where a long shelf-life is not required, at least 0.5% stabilizer is needed to produce the emulsion. Without sufficient stabilizer, emulsions will coalescence too quickly into two phases to be applicable for their purpose. The amount of stabilizer used should be the amount of stabilizer required to obtain an emulsion which is sufficiently stable for its purpose. Emulsions created through mechanical agitation often require additional stabilizer in order to create said emulsion, rather than stabilize it, to reduce mixing/kneading time and energy requirements. The method of the present invention circumvents these issues, allowing the production of emulsions which could not be formed through mechanical agitation.

Stabilizer is generally expensive and frequently not desired within the final product. Stabilizer or emulsifier is used to create and / or stabilize emulsions. The method according to the present invention allows the creation of emulsions with considerably smaller amounts of stabilizer than the use of mechanical agitators. As a result, stabilizer can be added to acquire the desired stability of the emulsion, which is often less than what is required to produce said emulsion. Determining the amount of stabilizer required to produce a (sufficiently) stable emulsion can be done through trial and error. Within the low-stabilizer regime, increasing the amount of stabilizer generally leads to smaller particle size. In the high-stabilizer regime, increasing the amount of stabilizer will not have an effect on the particle size. The method according to the invention allows production of emulsions with a droplet distribution which is geometrically controlled, rather than through the energy input and amount of stabilizer both of which cannot be decided independently and can be difficult to measure and control.

An emulsion produced with the method according to the present invention contains less stabilizer at a fixed particle size compared to mechanical agitation in the high-stabilizer regime. An emulsion produced with the method according to the present invention can have smaller droplet diameters for a fixed amount of stabilizer mechanical agitation in the high-stabilizer regime.

In a preferred embodiment, the multi-layered structure is collapsed by inserting an additional fluid perpendicular to the flow of the layers. This additional fluid is preferably the desired dispersion medium. The dispersion medium is generally the aqueous phase, but can be either phase. By inserting the dispersion medium perpendicular to the multi-layered structure, small liquid droplets are separated and surrounded by the dispersion medium. As a result, if these droplets do not quickly coalescence then an emulsion with a desired particle size distribution can be created. Furthermore, this particle size distribution is generally more narrow than for mechanical agitation mechanisms, or rather the variation in particle size is significantly smaller than for emulsions created by addition of stabilizer and mechanical agitation. Furthermore, compared to collapsing the multi-layered structure by radial mixing, not the entire target dispersion phase needs to undergo flow division. As fewer material needs to pass the layer multiplier in order to form a multi-layered structure, energy is saved and a smaller layer multiplier can be used.

In another embodiment, the multi-layered structure is collapsed by radial mixing. A radial mixing unit can be placed downstream of one or multiple layer-multiplier units. This results in a single process stream, and thus static mixer assembly, wherein both phases are supplied, multiplied and collapsed into an emulsion. In a further, preferred embodiment, the flow rate is increased by stretching the multi-layered structure. An increased flow-rate is beneficial for radial mixing, and allows a laminar flow regime within the flow-division assembly followed by a turbulent flow regime within the radial-mixing unit. This is advantageous as it leads to a single design. Furthermore this design does not comprise any moving parts, which results in fewer energy losses due to moving parts.

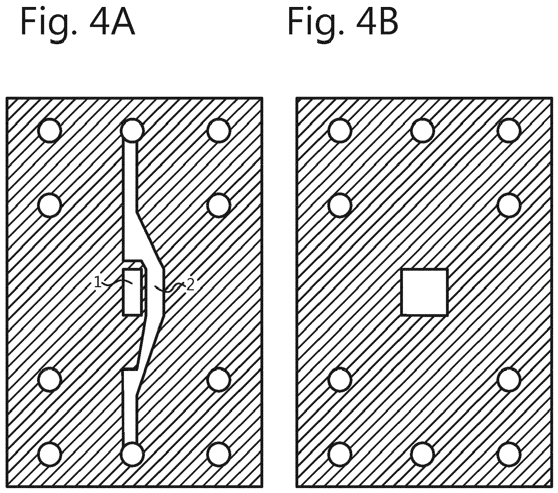

In another embodiment, the multi-layered structure is collapsed into an emulsion by a step-emulsification process. Said step-emulsification process comprises a transition from a shallow, narrow channel into a deep and wide reservoir. The abrupt, step-wise change from the shallow channel into the reservoir induces layer instabilities and layer break-up into emulsion droplets. This emulsification process can be realised by an assembly of the plates shown in figure 4. The multi-layered structure flows through a rectangular opening 1 in figure 4A into the deep reservoir of figure 4B to induce layer instability. A crossflow of the dispersion medium flowing in channel 2 of figure 4A will remove the thus formed droplets by advection. In a preferred embodiment the multi-layered structure is oriented perpendicular to the longest side of the rectangular opening 1 in figure 4A. In another preferred embodiment, the multi-layered structure is oriented parallel to the longest side of the rectangular opening 1 in Figure 4A.

In an advantageous embodiment of the first aspect, the present invention relates to a method for preparing a polyisobutene (PiB) in water emulsion comprising:
- combining a number of separate fluid streams of PiB and water with formation of alternating fluid lamellae of PiB and water,
- focusing the alternating fluid lamellae of PiB and water with formation of a focused total fluid stream,
- gradually tapering the cross-flow section of said focused total fluid stream in the direction of the flow in a manner that decays said alternating polyisobutene and water fluid lamellae.

PiB in water emulsions are of an particular interest for processing and using PiB in industry. Consequently, an efficient manner by which PiB in water emulsions can be created is desired. The inventors have found that collapsing the formation of alternating fluid lamellae within a focused total fluid stream through shear flow is not efficient for viscosity ratio between PiB and water above 4. Consequently, shear flow is not suitable for obtaining PiB in water emulsions with a small average diameter. The inventors have surprisingly found that elongational or extensional flow does allow efficient droplet breakup for viscosity ratio's well above 4. Consequently, the preferential method allows the emulsification of highly viscous PiB into water in an energy efficient manner. Furthermore, emulsions with superior properties such as smaller average diameter or better control over the particle size distribution of the emulsion is obtained.

In a further preferred embodiment, the following two steps are carried out once or several times :
- gradually tapering the cross-flow section of said focused total fluid stream in the direction of the flow from a first cross-flow section area A₁ to a second cross-flow section A₂, wherein the first cross-flow section area A₁ is larger than the second cross-flow section area A₂, and
- abruptly expanding said second cross-flow section area A₂ to a third cross-flow section area A₃, wherein said third cross-flow section is equal or larger than said second cross flow section area A₂.

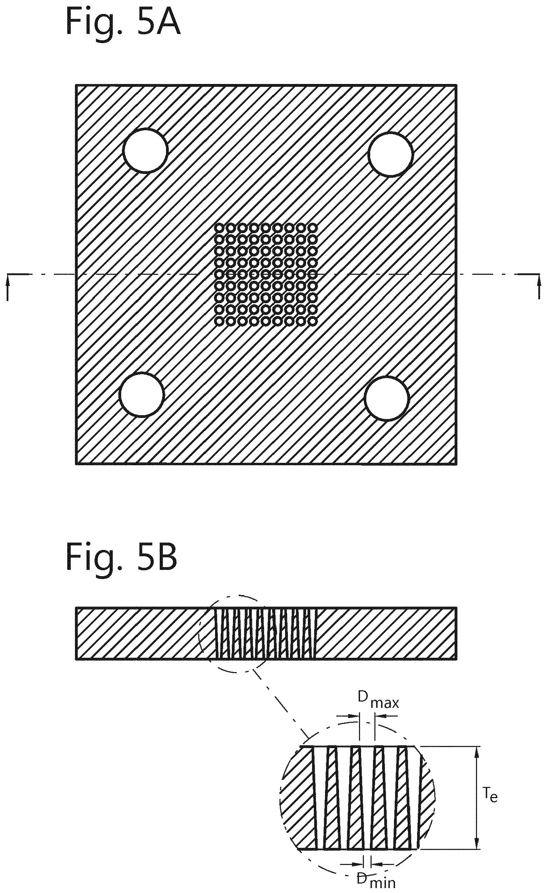

A modular plate in which the cross-flow section is tapered is shown in figure 5A. A cross-section of this plate is shown in figure 5B. Figure 5B shows a series of conical fluid passages. The fluid enters said conical passages where the diameter of the cones is at its maximum, Dₘₐₓ. It is pushed through to these cones, which are tapered in cross-section to a minimum cone diameter, Dₘᵢₙ at the other side of said plate. This creates an elongational or extensional flow regime.

In a preferred embodiment, at least one stabilizer is added to at least one polyisobutene and / or water stream. More preferably, a stabilizer is added to each polyisobutene and / or water stream. Most preferably, a stabilizer is added to each polyisobutene and water stream. Stabilizers are clearly described herein.

In a further, preferred embodiment a first stabilizer is added to at least one water stream, and wherein a second stabilizer is added to at least one polyisobutene stream, wherein the first and the second stabilizer comprise corresponding surface active moieties, preferably said corresponding surface active moieties are an acidic and basic moieties. The use of said corresponding surface active moieties stabilizes the liquid-liquid surface. It is beneficial to the formation of alternating fluid lamellae with a low average thickness. Furthermore, it is beneficial to promoting stratified flow, and thus efficient mixing, within a static mixer or fluid multiplier as defined herein. In a further preferred embodiment, at least one polyisobutene stream comprises a fatty acid, preferably stearic acid, more preferably isostearic acid. More preferably, all polyisobutene streams comprise a fatty acid, preferably stearic acid, more preferably isostearic acid. In another preferred embodiment, at least one water stream comprises a base, preferably morpholine. More preferably, all water streams comprise a base, preferably morpholine. In a further, more preferred embodiment at least one, preferably all, polyisobutene stream(s) comprises a fatty acid, preferably stearic acid, more preferably isostearic acid and at least one, preferably all, water stream(s) comprise a base, preferably morpholine.

In a preferred embodiment, the ratio of the dynamic viscosity of a PiB stream to the dynamic viscosity of a water stream is higher than 4, preferably higher than 10, more preferably higher than 50, more preferably higher than 100, more preferably higher than 500, more preferably higher than 1.000, more preferably higher than 3.000, more preferably higher than 5.000, most preferably at least 10.000. The elongational or extensional flow conditions, created by tapering the flow cross-section in the direction of the flow, are in particular advantageous over alternative methods for large viscosity ratios. In particular, shear flow shows a significant drop-off in droplet breakup for high viscosity ratios. Subsequently, the present invention is particularly advantageous for PiB emulsions with a high viscosity ratio. Said viscosities are measured at the temperature at which the cross-section is tapered, and thus emulsification is carried out.

The temperature at which the emulsion is formed, for this process the temperature at which the cross-section tapering is carried out, is called the process temperature.

The operating temperature is higher than at least -50°C. The operating temperature is below 250°C. This requires the use of a static mixer which can withstand these temperatures. This also implies that both phases are sufficiently liquid and within the abovementioned viscosity ranges at these temperatures. In a preferred embodiment, the operating temperature is above -40°C, more preferably above - 30°C, more preferably above -20°C, more preferably above -10°C, more preferably above 0°C, more preferably above 10°C, more preferably above 20°C. Operating around room temperature is advantageous as there are no heating or cooling requirements. Operating at lower or higher temperatures can be advantageous depending on the properties, such as melting temperature of the materials, of the first and second phase. In a preferred embodiment, the operating temperature is below 240°C, more preferably below 230°C, more preferably below 220°C, more preferably below 210°C, more preferably below 200°C, more preferably below 190°C, more preferably below 180°C, more preferably below 170°C, more preferably below 160°C, more preferably below 150°C, more preferably below 140°C. Higher temperatures reduce the viscosity of most materials, which may be required to allow sufficient flow division. A particular advantage of the present invention is allowing the emulsification of highly viscous PiB in water without significantly at lower process temperatures. It is known that increasing the process temperature will result in a lower viscosity for PiB, making it easier to handle and emulsify. However, increasing the temperature of the process is also a significant energy cost. This is not ecological, economical or efficient. In a preferred embodiment, the process temperature or operating temperature is lower than 100°C, preferably lower than 80°C, , preferably lower than 75°C, preferably lower than 70°C, preferably lower than 65°C, preferably lower than 60°C, preferably lower than 55°C, preferably lower than 50°C, preferably lower than 45°C, preferably lower than 40°C, preferably lower than 35°C, preferably lower than 30°C, preferably lower than 25°C, preferably lower than 20°C, most preferably the process temperature or operating temperature is equal to the ambient temperature or room temperature. This results in less or no energy spent to heat up PiB and / or the entire process; leading to a more energy efficient emulsification process.

The cross-flow section is gradually tapered in the direction of the flow from a first cross-flow section area A₁, to a second cross-flow section area A₂. In a preferred embodiment the first cross-flow section area A₁ is between 10.000 and 100.000 µm². In another preferred embodiment, the second cross-flow section area A₂, wherein the cross-flow section area A₂ is between 2.500 and 25.000 µm². In a more preferred embodiment, the ratio of the first cross section area A₁ to the second cross section area A₂ is between 1.5 and 20, preferably between 2 and 10, more preferably between 2 and 8, more preferably between 2 and 6, most preferably between 3 and 5. In a more preferred embodiment, the first cross-flow section area is between 10.000 and 100.000 µm² and the ratio of the first cross-flow section area and the second cross-flow section area is between 1.5 and 20, preferably between 2 and 10, more preferably between 2 and 8, more preferably between 2 and 6, most preferably between 3 and 5. Repeatedly tapering the cross-flow section to produce extensional flow followed by abruptly expanding the cross-flow section allows keeping the ratio between the first and the second cross-flow section area within these margins. This is advantageous as it leads to a lower pressure drop over the setup or the equipment, and thus lower energy requirements.

In another preferred embodiment, the cross-flow section is tapered in the direction of the flow over a length t, wherein the length t is comprised between 0.5 and 100 mm, preferably between 0.5 and 80 mm, more preferably between 0.5 and 75 mm, more preferably between 0.5 and 60 mm, more preferably between 0.5 and 50 mm, more preferably between 0.5 and 40 mm, more preferably between 0.5 and 30 mm, more preferably between 0.5 and 25 mm, more preferably between 0.5 and 20 mm, more preferably between 0.5 and 10 mm, more preferably between 1 and 10 mm. This method in particular allows for a beneficial extensional flow regime wherein a focused total fluid stream comprising alternating fluid lamellae of PiB and water decay into droplets of PiB within water. The flow regime allows for very energy-efficient and time-efficient mixing and can result in mono-disperse PiB in water emulsions with a small average droplet diameter.

In another embodiment, the invention relates to a method for reducing the average droplet diameter of an emulsion, comprising the steps :
- providing an emulsion, comprising droplets of a dispersed phase within a continuous phase, characterized by an average droplet diameter and a viscosity ratio of the dispersed phase to said continuous phase of at least 4, and
- reducing said average droplet diameter by forcing said emulsion through a gradually tapered cross-flow section of in the direction of the flow in a manner that decays said alternating polyisobutene and water fluid lamellae.

As shown by the examples, extensional or elongational flow as described herein can advantageously be used to reduce the average droplet diameter of an emulsion, in particular for emulsions wherein the dispersed phase is significantly more viscous than the continuous phase. In particular, the inventors surprisingly found that elongational flow is suitable to break up droplets, thus producing an emulsion with a smaller average particle diameter. The elongational flow can be applied to both an emulsion or a total fluid stream comprising alternating fluid lamellae produced by splitters as described herein.

This method is particularly advantageous for emulsions with a large viscosity ratio between the dispersed phase and the continuous phase as for PiB in water emulsions. PiB in water is an excellent example of an emulsion which has such a large viscosity ratio. In a preferred embodiment, the ratio of the dynamic viscosity of the dispersed phase to the dynamic viscosity of the continuous phase is higher than 4, preferably higher than 10, more preferably higher than 50, more preferably higher than 100, more preferably higher than 500, more preferably higher than 1.000, more preferably higher than 3.000, more preferably higher than 5.000, most preferably at least 10.000.

In a preferred embodiment this relates to polyisobutene in water dispersion. Elongational flow has been found to be very efficient for improving the properties, in particular the average droplet size and the droplet distribution, of polyisobutene in water emulsions. In another preferred embodiments, the preferences as described for the advantageous embodiment of the third aspect, wherein the present invention relates to a method for preparing a polyisobutene (PiB) in water emulsion, also apply to the method to reduce the average droplet diameter of an emulsion. Advantageously, the present method can thus be used to optimize the droplet size distribution and reduce the average droplet diameter of emulsions formed by any means.

The invention further relates to the use of this preferential method to obtain a polyisobutene emulsion.

In a another aspect, the present invention relates to a method for preparing a dispersion, comprising the steps :
- providing two sufficiently liquid phases for static mixing,
- creating an emulsion according to the first aspect of the present invention,
- producing a dispersion from said emulsion by cooling, heating or other physical or chemical treatments of said dispersion.

In a particular embodiment, the second aspect relates to a method for preparing a suspension or solid sol, by first preparing an emulsion at a sufficiently high temperature. A sufficiently high temperature is a temperature at which both phases are liquid and suitable for flow division in a static mixer. For a homogeneous material with a well-defined melting point, the melting temperature Tₘ can be used. For polymers, the glass transition temperature T_{g} can be a better indicator. For materials and phases without a well-defined melting point, a person skilled in the art can determine a minimum required temperature trivially. This temperature is above the melting or glass temperature of the material, so it can be emulsified in a liquid state according to the method of the first aspect. After an emulsion is formed, the emulsion can be cooled below the melting or glass temperature. This subsequent cooling will solidify at least one liquid phase, thereby creating a suspension or solid sol.

In a third aspect, the present invention relates to an emulsion produced by the method according to the first aspect.

These emulsions have several advantages. Emulsions of more viscous liquids can be created. Emulsions can be created with a better control of the particle size distribution. The particle size distribution can be more narrow, or rather the variation in particle size is smaller in emulsions according to the present invention. The amount of stabilizer is generally lower, as is the energy cost related to creating emulsions according to the present invention. As a result, these emulsions are generally cheaper.

Additionally, emulsions which were previously too expensive or impossible to create through mechanical agitation can be formed. This includes emulsions with a high content of a certain phase, particularly if this phase is viscous. The third aspect of the invention relates to a particular example of such an emulsion.

In a fourth aspect, the present invention relates to an aqueous polyisobutene emulsion comprising :
- 60 wt.% to 95 wt.%, based on the total weight of said emulsion, of polyisobutene,
- at maximum 5 wt.%, based on the total weight of said emulsion based on the total weight of said emulsion, of at least one surfactant, and
- optionally 1 wt.% to 30 wt.% , based on the total weight of said emulsion, of at least one wax and/or oil,
complemented with water to 100 wt. %, wherein the average particle size of said polyisobutene emulsion is not greater than 100 µm.

The fourth aspect of current invention relates to a polyisobutene emulsion with an average particle size smaller than 100 µm, it thereby provides an emulsion with good stability, good flowing parameters and relatively low viscosity and tackiness.

Aqueous emulsions comprising polyisobutene were previously limited to lower amounts of polyisobutene in order to obtain an emulsion with a particle size smaller than 100 µm. Aqueous emulsions with a low particle size of polyisobutene are desired, as these emulsions are easier to handle and process than polyisobutene pure liquid which is sticky and viscous. Increasing the amount of polyisobutene in these emulsions is advantageous as it reduces material costs, transport costs and the amount of aqueous phase required.

In a preferred embodiment of the fourth aspect, the invention relates to an aqueous polyisobutene emulsion comprising :
- polyisobutene,
- at maximum 5 wt.%, based on the total weight of said emulsion based on the total weight of said emulsion, of at least one stabilizer, and
- optionally 1 wt.% to 30 wt.% , based on the total weight of said emulsion, of at least one wax and/or oil,
- complemented with water to 100 wt. %,
wherein the emulsion comprises 65 wt.% to 95 wt.%, based on the total weight of said emulsion, of polyisobutene.

In a preferred embodiment, the emulsion comprises 66 wt.% to 95 wt.% based on the total weight of said emulsion, of polyisobutene, wherein the average diameter measured by laser diffraction is lower than 1 µm, more preferably lower than 0.9 µm, more preferably lower than 0.8 µm, more preferably lower than 0.7 µm, more preferably lower than 0.6 µm, more preferably lower than 0.5 µm, more preferably lower than 0.4 µm, more preferably lower than 0.3 µm, more preferably lower than 0.2 µm, more preferably lower than 0.1 µm.

Since the current invention relates to a polyisobutene emulsion with at maximum 5 wt.% of surfactants and an average particle size smaller than 100 µm, it thereby provides in an emulsion with good stability, good flowing parameters and relatively low viscosity and tackiness. Furthermore, the viscosity of an aqueous polyisobutene emulsion is related to good flowing properties and is related to the ease of handling and the energetic input that is required for manipulating said emulsion. A comparatively low viscosity generally gives rise to a polyisobutene emulsion with good flowing properties and a low energetic input for manipulation said emulsion.

Some of the advantages provided by the above described aqueous polyisobutene composition is that it contains a relatively low content of water. In several applications, a polyisobutene in water emulsion is used as a carrier for the polyisobutene. After use, water evaporates and leaves a polyisobutene layer. A low content of water reduces the energetic requirements for transporting said emulsion from manufactory to the location where it is applied. Simultaneously, it allows for a high polyisobutene content, thereby providing a maximum usefulness of said emulsion. The good flowing properties allow for ease of handling and lower requirements regarding the energetic input for manipulating said aqueous polyisobutene emulsion. The comparatively small average particle size of the polyisobutene emulsion is inversely related to the long-term stability of said emulsion; a smaller average particle size guaranties a longer shelf-life of said emulsion. This is advantageous, since it reduces the amount of emulsions that expires beyond its useful lifetime due to long storage and thus reduces waste generation. In addition, the use of surfactants is not always environmentally innocent, and the reduced amount of surfactant that is required for the preparation of the disclosed polyisobutene emulsions reduces significantly their environmental impact.

In a more preferred embodiment, said polyisobutene emulsion has an average particle size of not greater than 90 µm. More preferably, said polyisobutene emulsion has an average particle size of not greater than 80 µm. More preferably, said polyisobutene emulsion has an average particle size of not greater than 70 µm. Even more preferably, said polyisobutene emulsion has an average particle size of not greater than 60 µm.

In a preferred embodiment, the present invention provides in an aqueous polyisobutene emulsion, whereby the average particle size of said polyisobutene emulsion is not greater than 50 µm.

In a more preferred embodiment, said polyisobutene emulsion has an average particle size of not greater than 40 µm. More preferably, said polyisobutene emulsion has an average particle size of not greater than 35 µm. More preferably, said polyisobutene emulsion has an average particle size of not greater than 30 µm. Even more preferably, said polyisobutene emulsion has an average particle size of not greater than 25 µm.

In a preferred embodiment, the present invention provides in an aqueous polyisobutene emulsion, whereby the average particle size of said polyisobutene emulsion is not less than 250 nm and not greater than 25 µm.

In a more preferred embodiment, said polyisobutene emulsion has an average particle size comprised between 300 nm and 25 µm. More preferably, said polyisobutene emulsion has an average particle size comprised between 400 nm and 25 µm. Even more preferably, said polyisobutene emulsion has an average particle size comprised between 500 nm and 25 µm. Most preferably, said polyisobutene emulsion has an average particle size comprised between 500 nm, 750 nm, 1 µm, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm or any value there in between.

In a preferred embodiment, the present invention provides in an aqueous polyisobutene emulsion, wherein said polyisobutene is comprised in an amount between 60 wt.% and 95 wt.%, based on the total weight of said emulsion. Polyisobutene can be used as one type of polyisobutene or as a blend of different types of polyisobutene.

In a more preferred embodiment, said polyisobutene is comprised in an amount between 65 wt.% and 95 wt.% relative to the total weight of said emulsion. More preferably, said amount of polyisobutene is comprised between 65 wt.% and 93 wt.% relative to the total weight of said emulsion. Even more preferably, said amount of polyisobutene is comprised between 67 wt.% and 92 wt.% relative to the total weight of said emulsion. Even more preferably, said amount of polyisobutene is comprised between 68 wt.% and 91 wt.% relative to the total weight of said emulsion. Most preferably, said polyisobutene is comprised in an amount of 69 wt.%, 70 wt.%, 71 wt.%, 72 wt.%, 73 wt.%, 74 wt.%, 75 wt.%, 76 wt.%, 77 wt.%, 78 wt.%, 79 wt.%, 80 wt.%, 81 wt.%, 82 wt.%, 83 wt.%, 84 wt.%, 85 wt.%, 86 wt.%, 87 wt.%, 88 wt.% , 89 wt.% , 90 wt.% or any amount there in between relative to the total weight of said emulsion.

In a preferred embodiment, the present invention provides in an aqueous polyisobutene emulsion, whereby said wax is selected from the group comprising animal waxes, vegetable waxes, mineral waxes, petroleum waxes, polyolefin waxes, amide waxes, chemically modified waxes and combinations thereof, and whereby said oil is selected from the group comprising natural and mineral oils and combinations thereof.

Suitable waxes include both natural and synthetic waxes. Suitable waxes include animal waxes, such as bees wax, Chinese wax, wax shellac, spermaceti and wool wax; vegetable waxes such as bayberry wax, palm wax, candelilla wax, carnauba wax, castor oil wax, asparto wax, Japanese wax, jojoba oil wax, ouricury wax, rice bran wax and soybean wax; mineral waxes such as ceresin waxes, montan wax, ozokerite wax and turf wax; petroleum waxes, such as paraffin and microcrystalline waxes, and synthetic waxes, such as polyolefin waxes, including polyethylene and polypropylene waxes, polytetrafluoroethylene waxes (PTFE wax), Fischer-Tropsch waxes, stearamide waxes (including ethylene-bis-stearamide waxes), polymerized α-olefin wax, substituted amide waxes (for example, esterified or saponified substituted amide waxes) and other chemically modified waxes, such as PTFE-modified polyethylene wax, as well as combinations of the above. Preferably these waxes include paraffin wax, microcrystalline wax, Fischer-Tropsch waxes, linear and branched polyethylene waxes, polypropylene waxes, carnauba wax, ethylene-bis-stearamide (EBS) wax and combinations thereof.

Suitable oils include both natural and mineral oils. Natural oils comprise e.g. soybean oil, olive oil, sesame oil, cotton seed oil, castor oil, coconut oil, canola oil and palm oil, mineral oils such as paraffinic and/or naphthenic oils and petroleum jelly.

Other examples of suitable waxes and suitable oils are reported in US20110275738A1, US7153516B2, US20080274073A1 and US7767748B2, and are hereby included by reference.

One of the advantages of the above described composition is that it allows for further reduction of the tackiness and viscosity of the resulting polyisobutene emulsion.

In a preferred embodiment, the present invention provides in an aqueous polyisobutene emulsion, wherein said wax and/or said oil are comprised in an amount between 1 wt.% and 30 wt.%, based on the total weight of said emulsion.

In a more preferred embodiment, said wax and/or oil is comprised in an amount between 1 wt.% and 25 wt.% relative to the total weight of said emulsion. More preferably, said wax and/or oil is comprised in an amount between 1 wt.% and 20 wt.% relative to the total weight of said emulsion. Even more preferably, said wax and/or oil is comprised in an amount between 1 wt.% and 15 wt.% relative to the total weight of said emulsion. Most preferably, said wax and/or oil is comprised in an amount of 1 wt.%, 2 wt.%, 3 wt.%, 4 wt.%, 5 wt.%, 6 wt.%, 7 wt.%, 8 wt.%, 9 wt.%, 10 wt.%, 11 wt.%, 12 wt.%, 13 wt.%, 14 wt.%, 15 wt.% or any amount there in between relative to the total weight of said emulsion.

In another preferred embodiment, the present invention comprises an aqueous polyisobutene emulsion further comprising tackifiers. Tackifiers are chemical compounds used in formulating adhesives to modify the tack, the stickiness of the surface of the adhesive. In a further preferred embodiment, the tackifiers comprise tackifying resins. Examples include terpenes and modified terpenes, aliphatic, cycloaliphatic and aromatic resins particularly C5 aliphatic resins, C9 aromatic resins, and C5/C9 aliphatic/aromatic resins, hydrogenated hydrocarbon resins, and their mixtures, terpene-phenol resins and silicate resins. In another preferred embodiment, the tackifiers comprise rosins and their derivates. A rosin is a solid form of resin obtained from pines and some other plants, mostly conifers, produced by heating fresh liquid resin to vaporize the volatile liquid terpene components.

### Liquid phases

The first and second phase are liquid phases which are immiscible. Various liquids and their properties which can be advantageously emulsified using the present invention will be discussed here. First, more apolar liquids which are generally termed "non-aqueous" or "oil phase" liquids will be discussed.

In an embodiment, at least one of the first and second phase comprises a polymer. In a further preferred embodiment, the polymer comprises at least one of the following : polyvinylbutyral (PVB), silicone polymers, ethylene vinyl acetate, polyolefine copolymers. In a further, more preferred embodiment polyolefine copolymers comprise copolymers of ethylene and / or propylene with an alpha-olefin such as 1-hexene or 1-octene, low density polyethylene (LDPE), Polyethylene terephthalate (PET), high density polyethylene (HDPE), polypropylene (PP), ethylene vinyl alcohol (EVOH) and polyisobutene (PiB). In a different, preferred embodiment, at least one of the first and second phase comprises an elastomeric polymer. These are advantageously emulsified for coatings, paints and so forth.

In a further, more preferred embodiment, the present invention provides a process according to the first aspect of the invention, whereby at least one of the first and second phase is viscous, preferably a viscous polymer. The viscosity is preferably at least 10.000 mPa.s, as determined by zero shear viscosity at 20°C. Preferably, said elastomeric polymer has a viscosity of higher than 12.000 mPa.s, or even higher than 15.000 mPa.s, higher than 20.000 mPa.s, higher than 30.000 mPa.s, higher than 40.000 mPa.s, or higher than 50.000 mPa.s. More preferably, said elastomeric polymer has a viscosity of 100.000 mPa.s to 1.500.000 mPa.s, and even more preferably of 120.000 mPa.s to 1.000.000 mPa.s or of 140.000 mPa.s to 800.000 mPa.s. Most preferably, said elastomeric polymer has a viscosity of 150.000 mPa.s, 200.000 mPa.s, 250.000 mPa.s, 300.000 mPa.s, 350.000 mPa.s, 400.000 mPa.s, 450.000 mPa.s, 500.000 mPa.s, 550.000 mPa.s, 600.000 mPa.s, 650.000 mPa.s, 700.000 mPa.s or 750.000 mPa.s, or any value there in between. This is especially advantageous, as the method according to the present invention produces emulsions from viscous phases with considerably lower energy requirements as for mechanical agitation. Furthermore, less stabilizer is required. At viscosities above 50.000.000 mPa.s, repetitive flow division to obtain a multi-layered structure with sufficiently fine to collapse into an emulsion becomes unfeasible.

In another embodiment, the viscosity relates to the viscosity at operating temperature. In a preferred embodiment, the operating temperature for at least one of the first and second phase being a very viscous liquid is increased, to decrease said viscosity. This leads to lower energy requirements for flow division. The viscosity at operating temperature is preferably between 10 mPa.s and 10.000.000 mPa.s, more preferably between 20 mPa.s and 9.000.000 mPa.s, more preferably between 30 mPa.s and 8.000.000 mPa.s, more preferably between 40 mPa.s and 7.000.000 mPa.s, more preferably between 50 mPa.s and 6.000.000 mPa.s, more preferably between 100 mPa.s and 5.000.000 mPa.s, more preferably between 500 mPa.s and 5.000.000 mPa.s, more preferably between 1.000 mPa.s and 4.000.000 mPa.s, more preferably between 10.000 mPa.s and 3.000.000 mPa.s.

The operating temperature is higher than at least -50°C. The operating temperature is below 250°C. This requires the use of a static mixer which can withstand these temperatures. This also implies that both phases are sufficiently liquid and within the abovementioned viscosity ranges at these temperatures. In a preferred embodiment, the operating temperature is above -40°C, more preferably above - 30°C, more preferably above -20°C, , more preferably above -10°C, more preferably above 0°C, more preferably above 10°C, more preferably above 20°C. Operating around room temperature is advantageous as there are no heating or cooling requirements. Operating at lower or higher temperatures can be advantageous depending on the properties, such as melting temperature of the materials, of the first and second phase. In a preferred embodiment, the operating temperature is below 240°C, , more preferably below 230°C, more preferably below 220°C, more preferably below 210°C, more preferably below 200°C, more preferably below 190°C, more preferably below 180°C, more preferably below 170°C, more preferably below 160°C, more preferably below 150°C, more preferably below 140°C. Higher temperatures reduce the viscosity of most materials, which may be required to allow sufficient flow division.

In a preferred embodiment, the present invention provides a process according to the first aspect of the invention, whereby said at least one of said first and said second phases comprise polyisobutene. Polyisobutene is a polymer obtained by polymerisation, generally by cationic polymerisation, of isobutene as fundamental monomeric unit. Polyisobutene exists in different molecular weights. Low molecular weight is understood as a molecular weight up to 25.000 g/mol, and preferably up to 10.000 g/mol; medium molecular weight is understood from 40.000 g/mol to 500.000 g/mol, and preferably from 60.000 g/mol to 200.000 g/mol; and high molecular weight is understood as 500.001 g/mol to 1.100.000 g/mol.

In a further preferred embodiment, the polyisobutene has a molecular weight higher than 200 g/mol, preferably higher than 300 g/mol, preferably higher than 400 g/mol, preferably higher than 500 g/mol, preferably higher than 600 g/mol, preferably higher than 700 g/mol, preferably higher than 800 g/mol, preferably higher than 900 g/mol, more preferably higher than 1.000 g/mol, more preferably higher than 1.500 g/mol, more preferably higher than 2.000 g/mol, more preferably higher than 3.000 g/mol, more preferably higher than 4.000 g/mol, more preferably higher than 5.000 g/mol, more preferably higher than 6.000 g/mol, more preferably higher than 7.000 g/mol, more preferably higher than 8.000 g/mol, more preferably higher than 10.000 g/mol, more preferably higher than 20.000 g/mol. Preferably the molecular weight is lower than 1.000.000 g/mol, more preferably lower than 500.000 g/mol, more preferably lower than 400.000 g/mol, more preferably lower than 300.000 g/mol, more preferably lower than 200.000 g/mol, more preferably lower than 180.000 g/mol, more preferably lower than 160.000 g/mol, more preferably lower than 140.000 g/mol, more preferably lower than 120.000 g/mol, more preferably lower than 100.000 g/mol. Higher molecular weights are currently not economical to emulsify. Lower molecular weights are not as advantageous to emulsify.

Polyisobutene with various molecular weights are commercially available. Examples of polyisobutene produced by BASF are: with low molecular weight: Glissopal®V types, such as Glissopal®V190, Glissopal®V 500, Glissopal®V 640, Glissopal®V 1500; with medium molecular weight: Oppanol®B types, such as Oppanol®B 10, Oppanol®B 11, Oppanol®B 12, Oppanol®B 13, Oppanol®B 14, Oppanol®B 15; with a high molecular weight: Oppanol®B types, such as Oppanol®B 30. Other examples include Tetrax® and Himol® products from : JXTG Nippon Oil & Energy Corporation.

Polyisobutene can be used as one type of polyisobutene or as a blend of different types of polyisobutene. It is known that the viscosity of a blend of polyisobutenes with different molecular weights is determined by the content of the various types of polyisobutene, and that the viscosity of polyisobutene increases with increasing molecular weight.

In another embodiment, at least one of the first and second phase can comprise either as component or as main constituent oils and/or waxes. Suitable oils comprise both natural and mineral oils. Natural oils comprise e.g. soybean oil, olive oil, sesame oil, cotton seed oil, castor oil, coconut oil, canola oil and palm oil, mineral oils such as paraffinic and/or naphthenic oils and petroleum jelly.

Suitable waxes include both natural and synthetic waxes. Suitable waxes include animal waxes, such as bees wax, Chinese wax, wax shellac, spermaceti and wool wax; vegetable waxes such as bayberry wax, palm wax, candelilla wax, carnauba wax, castor oil wax, asparto wax, Japanese wax, jojoba oil wax, ouricury wax, rice bran wax and soybean wax; mineral waxes such as ceresin waxes, montan wax, ozokerite wax and turf wax; petroleum waxes, such as paraffin and microcrystalline waxes, and synthetic waxes, such as polyolefin waxes, including polyethylene and polypropylene waxes, polytetrafluoroethylene waxes (PTFE wax), Fischer-Tropsch waxes, stearamide waxes (including ethylene-bis-stearamide waxes), polymerized α-olefin wax, substituted amide waxes (for example, esterified or saponified substituted amide waxes) and other chemically modified waxes, such as PTFE-modified polyethylene wax, as well as combinations of the above. Preferably these waxes include paraffin wax, microcrystalline wax, Fischer-Tropsch waxes, linear and branched polyethylene waxes, polypropylene waxes, carnauba wax, ethylene-bis-stearamide (EBS) wax and combinations thereof.

In a preferred embodiment, at least one of the first and second phase comprises vegetable oils. In a further preferred embodiment, the first and second phase comprise an aqueous phase and an oil phase, wherein said aqueous phase comprises water and said oil phase comprises a vegetable oil. In a further preferred embodiment, said vegetable oil is hydrogenated. In a further preferred embodiment, said vegetable oil comprises at least one of the following: hydrogenated coconut oil, hydrogenated palm oil, hydrogenated rapeseed oil or blends thereof. These emulsions are economically interesting as they are produced and sold on relatively large scales, and a method for continuous production thereof such as the one proposed in the present invention is desirable.

In another preferred embodiment, at least one of the first and the second phase comprises at least one of the following: hydrogenated coconut oil, hydrogenated palm oil, hydrogenated rapeseed oil or blends thereof.

In a preferred embodiment, the emulsion is essentially free of organic solvents. Solvents are generally not environmentally friendly. Furthermore, solvents are often not desired in the end-product and may need to be removed. As used herein, the phrase "essentially free of organic solvents" means that solvents are not added to the elastomeric polymer, in order to create a mixture of suitable viscosity that can be processed more easily. More specifically, "organic solvents" as used herein is meant to include any water immiscible low molecular weight organic material added to the non-aqueous phase of an emulsion for the purpose of enhancing the formation of the emulsion, and is subsequently removed after the formation of the emulsion, such as evaporation during a drying or film formation step. Thus, the phrase "essentially free of organic solvent" is not meant to exclude the presence of solvent in minor quantities in process or emulsions of the present invention. For example, there may be instances where the elastomeric polymer or stabilizer contains minor amounts of solvent as supplied commercially. Small amounts of solvent may also be present from residual cleaning operations in an industrial process. Furthermore, small amounts of solvent may also be added to the process of the present invention for purposes other than to enhance the formation of the water-continuous emulsion. Preferably, the amount of solvent present in the emulsion should be less than 5 % by weight of the emulsion, more preferably the amount of solvent should be less than 2% by weight of the emulsion, and most preferably the amount of solvent should be less than 1% by weight of the emulsion. Illustrative examples of "organic solvents" that are included in the above definition are relatively low molecular weight hydrocarbons having normal boiling points below 200°C, such as alcohols, ketones, ethers, esters, aliphatics, alicyclics, or aromatic hydrocarbon, or halogenated derivatives thereof. As merely illustrative of solvents to be included in the definition of "organic solvents", there may be mentioned butanol, pentanol, cyclopentanol, methyl isobutyl ketone, secondary butyl methyl ketone, diethyl ketone, ethyl isopropyl ketone, diisopropyl ketone, diethyl ether, sec-butyl ether, petroleum ether, ligroin, propyl acetate, butyl and isobutyl acetate, amyl and isoamyl acetate, propyl and isopropyl propionate, ethyl butyrate, pentane, hexane, heptane, cyclopentane, cyclohexane, cycloheptane, methylene chloride, carbon tetrachloride, hexyl chloride, chloroform, ethylene dichloride, benzene, toluene, xylene, chlorobenzene, and mixtures thereof with each other and/or more water soluble solvents. Furthermore, the use of an organic solvent as aqueous or non-aqueous phase is not excluded, rather its use to facilitate creating an emulsion is not required.

The present invention is not limited to water/oil emulsions or aqueous/non-aqueous emulsions. However, aqueous and non-aqueous liquids often show limited miscibility and therefor are frequently used to create emulsions.

The "aqueous phase" as described herein does not refer to water, but rather to the more hydrophilic of the two immiscible liquids which are used to form the multilayer and consequently the emulsion. Examples of hydrophilic substances suitable as aqueous phase known in the art include : water, glycerol, methanol, ethanol, n-propanol, t-butanol, ammonia, formaldehyde, acetone or acetic acid. They are generally well-suited for forming an emulsion with an oily substance or wax.

### Stabilizers

Any type of stabilizers known to the person skilled in the art may be used. A stabilizer, also known as "emulgent" or "emulsifier" is a substance that stabilizes an emulsion by increasing its kinetic stability, that is to say increase the time scale on which the emulsion destabilizes, therefor increasing its shelf life.

One class of stabilizers is the class of surfactants. Surfactants are surface active agents, which typically have a polar or hydrophilic and non-polar or lipophilic part. Thereby, the hydrophobic part comprises normally 4 to 20 carbon atoms, preferably 6 to 19 carbon atoms and even more preferably 8 to 18 carbon atoms.

A wide range of surface-active compounds can be used as surfactant. Preferably, the used surfactant will be selected from the group of anionic, cationic or non-ionic surface-active compounds.

Anionic surface-active compounds comprise saponified fatty acids and derivatives of fatty acids with carboxylic groups such as sodium dodecylsulphate (SDS), sodium dodecyl benzene sulphonate, sulphates and sulphonates and abietic acid.

Examples of anionic surfactants are also: carboxylates, sulphonates, sulpho fatty acid methyl esters, sulphates, phosphates.

A carboxylate is a compound which comprises at least one carboxylate group in the molecule. Examples of carboxylates are:
- soaps, such as stearates, oleates, cocoates of alkaline metals or of ammonium, alkanolamines
- ether carboxylates, such as Akypo® RO20, Akypo® RO50, Akypo® RO90

A sulphonate is a compound, that comprises at least one sulphonate group in the molecule. Examples of sulphonates are:
- Alkyl benzene sulphonates, such as Lutensit® A-LBS, Lutensit® A-LBN, Lutensit® A-LBA, Marlon® AS3, Maranil ® DBX
- Alkyl naphtalene sulphonates condensed with formaldehyde, lignine sulphonates, such as e.g. Borresperse NA, Tamol NH7519
- Alkyl sulphonates, such as Alscoap OS-14P, BIO-TERGE® AS-40, BIO-TERGE® AS-40 CG, BIO-TERGE® AS-90 Beads, Calimulse® AOS-20, Calimulse® AOS-40, Calsoft® AOS-40, Colonial® AOS-40, Elfan® OS 46, Ifrapon® AOS 38, Ifrapon® AOS 38 P, Jeenate® AOS-40, Nikkol® OS-14, Norfox® ALPHA XL, POLYSTEP® A-18, Rhodacal® A-246L, Rhodacal® LSS-40/A
- Sulphonated oil, such as Turkish red oil
- Olefin sulphonates
- Aromatic sulphonates, such as Nekal®BX, Dowfax® 2A1

A sulphate is a compound that comprises at least one SO₄-group in the molecule. Examples of sulphates are:
- Fatty acid alcohol sulphates, such as coco fatty acid alcohol sulhphate (CAS 97375-27-4), e.g. EMAL®10G, Dispersogen®SI, Elfan® 280, Mackol® 100N
- Other alcohol sulphates, such as Emal® 71, Lanette® E
- Coco fatty acid alcohol ether sulphates, such as EMAL® 20C, Latemul® E150, Sulfochem® ES-7, Texapon® ASV-70 Spec., Agnique SLES-229-F, Octosol 828, POLYSTEP® B-23, Unipol® 125-E, 130-E, Unipol® ES-40
- Other alcohol ether sulphates, such as Avanel® S-150, Avanel® S 150 CG, Avanel® S150 CG N, Witcolate® D51-51, Witcolate® D51-53.

A phosphate is a compound that comprises at least one PO₄-group in the molecule. Examples of phosphates are:
- Alkyl ether phosphates, such as Maphos® 37P, Maphos® 54P, Maphos® 37T, Maphos® 210T, Maphos® 210P
- Phosphates such as Lutensit A-EP
- Alkyl phosphates

The anionic surfactants are preferable added to salt. Salts are preferably alkaline metal salts, such as sodium, potassium, lithium, ammonium hydroxylethyl ammonium, di(hydroxyethyl)ammonium and tri(hydroxyethyl) ammonium salts or alkanolamine salts.

Cationic surface-active compounds comprise dialkyl benzene alkyl ammonium chloride, alkyl benzyl methyl ammonium chloride, alkyl benzyl dimethyl ammonium bromide, benzalkonium chloride, cetyl pyridinium bromide, C₁₂, C₁₅, or C₁₇ trimethyl ammonium bromides, halide salts of quaternary polyoxy-ethylalkylamines, dodecyl benzyl triethyl ammonium chloride and benzalkonium chloride.

Examples of cationic surfactants are also: quaternary ammonium compounds. A quaternary ammonium compound is a compound, that comprises at least one R₄N⁺-group in the molecule. Examples of counter ions that can be used in quaternary ammonium compounds are:
- Halogen, methosulphates, sulphates and carbonates of coco fat or cetyl/oleyl trimethyl ammonium.

Preferably, the following cationic surfactants are used:
- N,N-dimethyl-N-(hydroxy-C₇-C₂₅-alkyl)ammonium salts
- Mono- and di(C₇-C₂₅-alkyl) dimethyl ammonium compounds
- Ester quats, especially mono-, di- and trialkanol amines, quaternary esterificated with C₈-C₂₂ carboxylic acids.
- Imidazolin quats, especially 1-alkylimidazolinium salts.

A betain surfactant is a compound that, under conditions of use, comprises at least one positive charge and at least one negative charge. An alkyl betain is a betain surfactant that comprises at least one alkyl unit per molecule. Examples of betain surfactants are:
- Cocamidopropylbetain, such as MAFO® CAB, Amonyl® 280BE, Amphosol® CA, Amphosol® CG, Amphosol® CR, Amphosol® HCG, Amphosol® HCG-50, Chembetaine® C, Chembetaine® CGF, Chembetaine® CL, Dehyton® PK, Dehyton® PK 45, Emery® 6744, Empigen® BS/F, Empigen® BS/FA, Empigen® BS/P, Genagen® CAB, Lonzaine® C, Lonzaine® CO, Mirataine® BET-C-30, Mirataine® CB, Monateric® CAB, Naxaine® C, Naxaine® CO, Norfox® CAPB, Norfox® Coco Betaine, Ralufon® 414, TEGO®-Betain CKD, TEGO® Betain E KE 1, TEGO®-Betain F, TEGO®-Betain F 50, and aminoxides such as alkyl dimethylamineoxide.

Non-ionic surfactant comprise polyvinyl alcohol, poly-acrylic acid, methalose, methyl cellulose, ethyl cellulose, propyl cellulose, hydroxy ethyl cellulose, carboxymethyl cellulose, natural gum, polyoxyethylene cetyl ether, polyoxyethylene lauryl ether, polyoxyethylene octyl ether, polyoxyethylene octylphenyl ether, polyoxyethylene oleyl ether, polyoxyethylene sorbitan monolaurate, polyoxyethylene stearyl ether, polyoxyethylene nonylphenyl ether and dialkylphenoxy poly(ethyleneoxy) ethanol.

Non-ionic surfactant have a neutral, polar and hydrophilic head that makes non-ionic surfactant water-soluble. Such surfactants adsorb at surfaces and aggregate to micelles above their critical micelle concentration. Depending on the type of head, different surfactant can be identified, such as (oligo)oxyalkylene groups, and especially (oligo)oxyethylene groups, (polyethylene)glycol groups and carbohydrate groups, such as alkyl polyglucosides and fatty acid N-methyl glucamides.

Alcohol phenolalkoxylates are compounds that can be produced through addition of alkylene oxide, preferably ethylene oxide, to alkyl phenols. Non-limiting examples are: Norfox® OP-102, Surfonic® OP-120, T-Det® 0-12.

Fatty acid ethoxylates are fatty acid esters, that are treated with different amounts of ethylene oxide.

Triglycerides are esters of glycerol (glycerides), in which all three hydroxyl groups are esterificated with fatty acids. These can be modified with alkylene oxides. Fatty acid alcohol amides comprise at least one amide group with an alkyl group and one or two alkoxyl groups. Alkyl polyglycosides are mixtures of alkyl monoglucosides (alkyl-α-D- and -β-D-glucopyranoside with a small amount -glucofuranoside), alkyl diglucosides (-isomaltosides, -maltosides and others) and alkyloligoglucosides (-maltotriosides, -tetraosides and others).

Alkyl polyglycosides can non-limiting be synthesized with an acid catalysed reaction (Fisher reaction) of glucose (or starch) or n-butylglycosides with fatty acid alcohols. Further, also alkyl polyglycosides can be used as non-ionic surfactant. A non-limiting example is Lutensol® GD70. In addition, also non-ionic N-alkylated, preferably N-methylated, fatty acid amides can be used as surfactant.

Alcohol alkoxylates comprise a hydrophobic part with a chain length of 4 to 20 carbon atoms, preferably 6 to 19 C-atoms and more preferably 8 to 18 C-atoms, whereby the alcohol can be linear or branched, and a hydrophilic part that comprises alkoxylate units, such as ethylene oxide, propylene oxide and/or butylene oxide, with 2 to 30 repeating units. Non-limiting examples are: Lutensol® XP, Lutensol® XL, Lutensol® ON, Lutensol® AT, Lutensol® A, Lutensol® AO, Lutensol® TO.

In another preferred embodiment, the emulsion comprises a non-surface active substance. In a further, preferred embodiment the emulsions comprises polyelectrolytes. Polyelectrolytes are well-known substances (Encyclopedia of Polymer Science and Technology, Vol. 10, pages 781-854). Electrochemically a polyelectrolyte can be classified as polyacid, polybase or polyampholyte. This application is principally concerned with the polyacid and polybase polyelectrolytes. The polyelectrolyte additives may be described as water soluble high-molecular-weight polymers or copolymers with ionized substituent groups along the backbone chain. These ionized groups may be anionic or cationic in nature. Suitable polyelectrolyte precursors (PEP) are high-molecular-weight polymers or copolymers with anionic ionizable groups along the chain. These ionizable groups, namely acid groups, are readily converted to ionized groups by the addition of an appropriate base. These materials (polyelectrolytes and PEP's) may be either natural or synthetic. Preferably, the polymers used in this application are essentially linear (i.e. non-crosslinked); however, a small amount of crosslinking is acceptable provided that the polymer remains water soluble. The polyelectrolytes and the PEP's will usually be synthetic polymers having average molecular weights (as measured by gel permeation chromatography) of at least about 1,000, preferably 10,000 and as high as 10,000,000.

The anionic substituent ionized groups will be the salts of acidic groups attached to the polymer backbone, including for example, carboxylic acid groups, sulfonic acid groups, phosphonic acid groups, etc. Such acid groups are attached directly to the carbon atoms of the backbone or attached through a connecting atom or atoms such as an oxygen or sulfur atom, an imino group, a polymethylene group or combinations thereof. Examples of this type attachment include monosulfate acid groups, monophosphate acid groups, methylene carboxylic acid groups, and the like. The preferred ionizable and ionized substituents are the polycarboxylic acid and polycarboxylic acid salts. There will usually be from 2, preferably 3, to about 30 carbon atoms per monomer. That is, the polymer monomers will usually have from 3 to 30 carbon atoms and 1 or more acidic groups.

Synthetic polymers and copolymers having ionizable or ionized groups useful for for this purpose are readily prepared by polymerizing or copolymerizing the appropriate monomers. Preferably, the monomers consist of monounsaturated compounds which undergo additional polymerization to form long, linear, polymers or copolymers. The addition of small amounts of di- or poly-unsaturated compounds will effect a small amount of crosslinking. Non-crosslinked polyelectrolytes are preferred.

It is to be understood that the salt of the ionizable group and the ionizable group itself may be formed after the polymer has been made as, for example, by hydrolyzing an anhydride such as polymaleic anhydride, or by saponifying a polyester, or polyamid, e.g., polymethacrylate, or polyacrylamide; or by hydrolyzing a nitrile group, e.g., polyacrylonitrile, etc.

Suitable acid or potential acid containing monomers for producing homo- or copolymers for this use include acrylic acid, acrylamide, acrylonitrile methyl acrylate, maleic anhydride, maleic acid, methacrylic acid, crotonic acid, allyloxyacetic acid, ethyl vinyl acetate, itaconic acid, citraconic anhydride, dimethyl fumarate, furfurylacrylic acid, 5-norbornene-2-acrylic acid, N-phenylmaleamic acid, vinyladipic acid, p-styrene sulfonic acid, p-styrene sulfinic acid, ethylene sulfonic acid, allyl hydrogen sulfate, allyl dihydrogen phosphate, allyl methyl hydrogen phosphate, p-vinyl phosphonic acid, and the like.

Suitable non-acid containing monomers useful for copolymerizing with one or more acid-containing monomers as, for example, from the above list to form suitable polyelectrolytes include methyl vinyl ether, methyl vinyl ketone, allyl ether, acrylonitrile, vinyl acetate, allyl methyl orthophthalate, vinyl octyl sulfide, ethylene, propylene, styrene, p-methoxy styrene, isobutene, and others.

In addition, polymers with acid sulfate or acid phosphate ionizable groups may also be prepared by sulfating or phosphating polyvinyl alcohol with sulfuric or phosphoric acid.

Natural anionic polyelectrolytes useful for this process include hydrolyzed yeast or gum arabic, lignin sulfonates, polymerized rosin acids, etc. Protein polyelectrolytes including blood, casein, gelatin and the like are also suitable.

Natural gums can also be used or modified as polyelectrolytes, such as gum Arabic and gum ghatti.

Polyelectrolytes are readily available on the market, including for example the Primacor® products from Resinex, Orotan® from Dow, Isobam ® from Kuraray and so forth.

In another preferred embodiment, the stabilizer comprises colloidal materials, preferably nanoparticles, more preferably functionalized nanoparticles.

Other suitable stabilizers include nanoparticles. These nanoparticles are prepared from colloidal materials from the group of silica, zinc oxide, titania, alumina, zirconia, vanadia, chromia, iron oxide, antimony oxide, tin oxide, other colloidal metal oxides, and mixtures thereof. These particles or colloids are preferably functionalized such that (a) the particles disperse in the oil and/or aqueous phase and preferably (b) chemical entities attached to the particle are capable of polymerization. These particles can comprise essentially a single oxide such as silica or can comprise a core of an oxide of one type (or a core of a material) on which is deposited the oxide of another type. These are readily available on the market, including for example the Aerosil® products from Evonik.

In another preferred embodiment, these colloidal materials include clays and organo-modified clays. Examples of such clays include montmorillonite, bentonite, hectorite, saponite, nontronite, beidellite, fluorohectorite, stevensite, volkonskoite, sauconite laponite, related analogs thereof and their physical blends. Clays that have been chemically modified to make them compatible with organic materials are preferred and are generally referred to as "organophilic" clays or "organo-clays". The basic starting material used to make organophilic clay is an exchangeable clay of the smectite group and can include montmorillonite (commonly known and mined as bentonite), hectorite, saponite, attapulgite and sepolite. These clays include exchangeable cationic species such as sodium, potassium or calcium ions on their surface and between clay galleries or layers. In the course of manufacturing an organophilic clay, at least a portion of these exchangeable cationic species are substituted by an organic cation such as a quaternary amine, an organophosphorus ion, any other ion of the type known in the art as an oniumion, or the like. Some representative examples of surfactants that can be used include methyl tallow bis-2 hydroxy ethyl ammonium salt, dimethyl hydrogenated-tallow (2-ethylhexyl) ammonium salt, dimethyl benzyl hydrogenated-tallow ammonium salt, dimethyl dihydrogenated tallow ammonium salt, N-tallow alkyltrimethylenediamine, hydrogenated tallow amine, octadecylamine, octadecylamine and gamma-aminopropyltriethoxy silane, polyoxyethylene decycloxypropylamine, n-dodecylpyrrolidone, or their combinations and analogs. Quarternary ammonium surfactants, such as methyl tallow bis-2-hydroxyethyl ammonium chloride, dimethyl hydrogenated-tallow (2-ethylhexyl) ammonium methyl sulfate, and dimethyl dehydrogenated-tallow ammonium chloride, are typically preferred. The addition of the organic group modifies the clay, making it compatible with organic compositions and in general allowing it to provide rheological modification in select organic fluids. The clay will typically be modified with up to about 70 parts by weight of the organic surfactant. The clay will more typically be modified with up to about 60 parts by weight of the organic surfactant and will preferably be modified with up to about 40 parts by weight of the organic surfactant. These organic surfactants to produce organo-clays are different and not to be confused with the surface-active surfactants used to stabilize emulsions described previously. These are readily available on the market, including for example the Cloisite® products from Byk.

### Additives

Further, also, if desired and/or necessary, additives may be added to the production process of the emulsion. Additives can have a positive influence on the production process of the emulsion, and may provide certain desired characteristics to the emulsions. An example of possibly used additives are, inter alia, bases to optimize the saponification process, as well as bactericides, dyes, viscosity modifiers for increase or reduction of the viscosity, anti-foaming agents, de-foaming agents. It should be clear to one skilled in the art that these are just examples of possibly used additives, and that other options are also possible.

Additives can have a positive influence on the production process of the emulsion, and may provide certain desired characteristics to the emulsions. An example of possibly used additives are, inter alia, bases to optimize the saponification process, as well as bactericides, dyes, viscosity modifiers for increase or reduction of the viscosity, anti-foaming agents, de-foaming agents. It should be clear to one skilled in the art that these are just examples of possibly used additives, and that other options are also possible. Other examples of suitable additives are reported in US 2011/0275738, US 7,153,516, US 2008/0274073 and US 7,767,748, and are hereby included by reference.

### Measurement methods

The solid content is determined by using a halogen dryer and heating the sample to 115°C. The water and volatiles are evaporated until a constant mass is obtained. Constant mass is defined as the rate of weight change is less than 0.05%/minute. Results are expressed as the weight percentage of non-evaporated components. This is performed with a Mettler-Toledo HR 73 moisture analyser.

The apparent viscosity of an emulsion is determined with a rotational viscometer. A measurement geometry (spindle) is inserted in the emulsion and rotated at a constant rotational velocity. The required torque is recorded. The viscosity is calculated based on the relation between torque and rotational velocity. Depending on the sample viscosity, different spindles can be used for higher accuracy.

Particle sizes are determined via laser diffraction and the interaction of the droplets with light. Depending on the particle size, light interacts differently and different physical models need to be used. This is performed with a Beckman Coulter LS 13320. For particle sizes over 0.4 µm, elastic light scattering is used. For particle sizes under 0.4 µm, polarized light scattering is used.

The present invention will be now described in more details, referring to examples that are not limitative.

### Examples

It is supposed that the present invention is not restricted to any form of realization described previously and that some modifications can be added to the presented example of fabrication without reappraisal of the appended claims. For example, the present invention has been described referring to emulsions comprising polymers, but it is clear that the invention can be applied to any emulsions, particularly emulsions comprising at least one viscous phase, for instance an emulsion of bitumen and water.

Unless stated otherwise, % as used in the examples refers to % by weight of the total emulsion. The expression "% by weight", "weight percent", "wt.%" or "wt.%", here and throughout the description unless otherwise defined, refers to the relative weight of the respective component based on the overall weight of the formulation. More specifically, it refers to the weight of a component to the total weight of the emulsion.

### Example 1

An emulsion of an oil phase based on polyisobutene (PiB) and an aqueous phase is created. The oil phase consists of 96% low molecular weight polyisobutene (Glissopal V190) and 4% isostearic acid. The aqueous phase consists of 15.7% water, 78.4% glycerine and 5.9% morpholine.

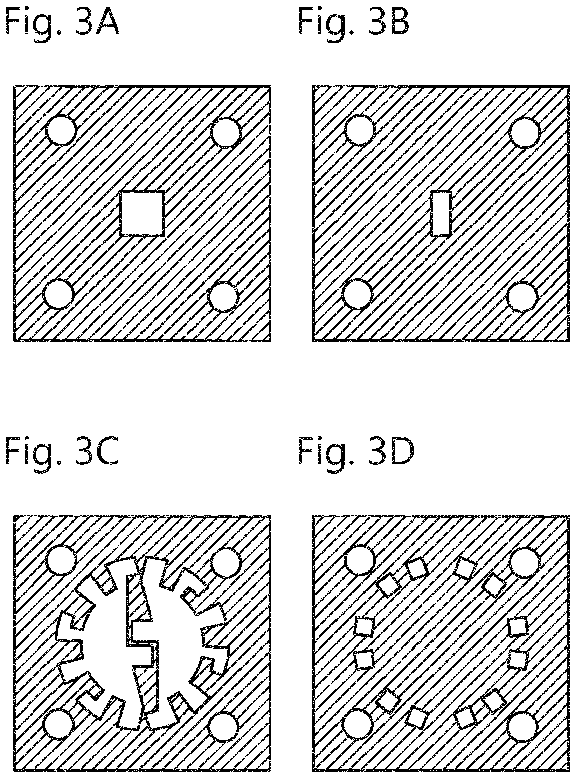

A static mixer suitable for viscous liquids according to US 9.636.646 B2 is used. This static mixer comprises stainless a series of steel plates in the appropriate geometry and dimensions and assembling these standard mixing plates into the correct order. The 4 base type plates for the layer multiplier are shown as figures 3A-3D.

Each mixing subunit or splitter creates 12 new sublayers. In this example, the flow multiplier comprises 4 subsequent splitters. White spaces represent through openings, and the white circle in each corner are bores used when assembling several plates. The bores of all plates will line up, such that screw means or other clamping means may be arranged in the thus created through-opening. The plates of Fig. 3A and Fig. 3B are used to form the coupling between separate layer-multipliers. Sandwiching a plate of Fig. 3D between two plates according to Fig. 3C of which one is flipped as compared to the view of Fig. 3C will form a layer multiplier.

The resulting multi-layered structure was broken using the step-emulsification process. The cross-flow at the end of the layer multiplier was accomplished by a similar set of plates shown in Fig. 4A and 4B. In figure 4A, the multilayered structure flows through 1, with in this case the multi-layered structure oriented perpendicular to the longest side of 1, preferably by using this plate in conjunction with plate 3A. The cross-flow of the desired continuous phase flows through section 2 of plate 4A. This results in a set of modular plates which can be combined into an assembly to create and collapse multilayered structures into emulsions continuously. In this example, 4 splitters followed by the crossflow assembly are used.

The layers of oil and water are then broken up, creating a dispersive mixture or emulsion. The layers are broken by inserting, perpendicular to the flow and the layers, an additional flow of the target continuous phase.

The flow rate of the oil phase into the static mixer was 4 ml/min. The flowrate of the aqueous phase was 1 ml/min. The flowrate of the aqueous phase in the crossflow channel for layer breakup was 3 ml/min. This resulted in an emulsion of the oil phase in the aqueous phase. The emulsion particle size was 1.28 µm.

### Example 2

Example 1 was repeated, with one additional splitter in the static mixer. The static mixer now comprises 5 subunits. The resulting emulsion of PiB in the aqueous phase had a particle size of 0.75 µm. It is expected that not enough stabilizer is present to stabilize smaller droplets.

### Example 3

Example 1 was repeated, with 4 splitters and surfactant and the addition of silica as colloids to further stabilizer the emulsion. The emulsion particle size was 3.5 µm.

### Example 4

Example 1 was repeated with 5 splitters. The layer multiplier now comprises 5 subunits. Furthermore, no surfactant was used but instead silica was added. The particle size was 11.2 µm.

### Examples 5-12

Polyisobutene emulsions were created with an AMK laboratory kneader VI U. These emulsions were created at a processing temperature of 90°C. The ingredients with the exception of water and biocide were first loaded into the kneader and mixed until homogenous. Water was then added at different rates while kneading as this was found to give the smallest particle sizes. In an initial phase, which lasts until 10% of the total amount of water was added, water was added at a rate of 2.5g water / min / kg PiB. The second phase, which lasts until 20% of the total amount of water was added, water was added at a rate of 5 g water / min / kg PiB. In the last phase, water was added at a rate of 12.5g water / min / kg PiB until the final concentration of water was reached. The produced emulsion is consequently cooled to ambient temperature, at which point the biocide is added.

The droplet distribution of examples 10-12 was investigated to evaluate the effect of tackifiers on the droplet distribution for PiB. Examples 10 and 12 comprise resin tackifier Regalite R1100. Example 11 comprises a rosin-based tackifier Foral 85E. In example 10, an emulsion was formed with a mean particle size of 1.04 µm. The rotational viscosity of the emulsion measured with a LV-63 spindle was 1290 mPa.s at 20 RPM, 870 mPa.s at 50 rpm and 630 at 100 rpm. In example 11, an emulsion was formed. However the rosin did not appear to be fully compatible, that is to say miscible, with the PiB as segregated domains within PiB were formed. The mean particle size was 5.1 µm. In example 12, an emulsion was formed with a mean particle size of 1.3 µm. The rotational viscosity of the emulsion measured with a LV-63 spindle was 270 mPa.s at 20 RPM, 211 mPa.s at 50 rpm and 214 at 100 rpm.

The formulations for examples 5 to 12 are shown in Table 1.

**Table 1 : Examples 5-12**

| Example | PIB | Stabilizer | Water [%] | Wax/oil/resin | Additive [%] |
|---|---|---|---|---|---|
| 5 | Oppanol B10 66.1% | Morpholine isostearate 3.8% | 30 | 0 | MBS (biocide) 0.1 |
| 6 | Oppanol B12 66.1% | Morpholine isostearate 3.8% | 30 | 0 | MBS (biocide) 0.1% |
| 7 | Oppanol B15 66.1% | Morpholine isostearate 3.8% | 30 | 0 | MBS (biocide) 0.1% |
| 8 | Tetrax 6T 78.9% Glissopal SA 2.1% | Morpholine isostearate 3.8% | 15.1 | 0 | MBS (biocide) 0.1% |
| 9 | Oppanol B12 66.1% | Morpholine isostearate 1.8% Primacor 5980i 2.0% | 30 | 0 | MBS (biocide) 0.1% |
| 10 | Oppanol B10 43.9% | Morpholine isostearate 3.4% | 38 | Regalite R1100 (resin) 14.6% | MBS (biocide) 0.1% |
| 11 | Oppanol B10 43.9% | Morpholine isostearate 3.4% | 38 | Foral 85 E resin) 14.6% | MBS (biocide) 0.1% |
| 12 | Himol 5.5 H 37.1% Glissopal SA 1.5% | Morpholine isostearate 3.4% | 37.9 | Regalite R1100 (resin) 5.7% Microwax 5920-2 (wax) 14.3% | MBS (biocide) 0.1% |

The mean particle size for examples 5-12 are shown in Table 2.

**Table 2 : Mean particle size in µm for examples 5-12**

| Example | Mean particle size [µm] |
|---|---|
| Example 5 | 1.04 |
| Example 6 | 1.73 |
| Example 7 | 1.65 |
| Example 8 | 1.15 |
| Example 9 | 1.16 |
| Example 10 | 1.04 |
| Example 11 | 5.1 |
| Example 12 | 1.3 |

### Examples 13-15

The static mixer setup of example 1 comprising 5 splitters was used to create aqueous emulsions of PiB. The flow rates towards the layer multiplier was 0.3 ml/min water and 3 ml/min PiB. The crossflow channel comprised a flow of 0.4 ml/min water. 3.4% morpholine isostearate was added as stabilizer. After an emulsion was formed, 0.1% MBS as biocide was added.

Example 13 used Oppanol B10 as polyisobutene. The operating temperature was 90°. An emulsion was formed.

Example 14 used Oppanol B15 as polyisobutene. The operating temperature was increased to 115°C. An emulsion was formed.

Example 15 used Tetrax 6T as polyisobutene. The operating temperature was 90°C. An emulsion was formed.

### Exam pies 16-19

The static mixer setup of example 1 comprising 4 splitters was used to create aqueous emulsions of hydrogenated vegetable oils, using water as the continuous phase. The flow rate into the layer multiplier was 0.7 ml/min for water and a flow rate for hydrogenated vegetable oil of 3.4 ml/min. An additional water flow rate of 1.2 ml/min was used as crossflow for the breakup of the multilayered structure. As stabilizer 4% silica was added to the hydrogenated vegetable oil. An emulsion was created, to which an 0.1% MBS was added after an emulsion was formed as biocide. The operating temperature was 65°C.

Example 16 used hydrogenated coconut oil. Example 17 used hydrogenated palm oil. Example 18 comprised hydrogenated rapeseed oil. Example 19 used a blend of 30% hydrogenated coconut oil and 70% hydrogenated rapeseed oil. In each case an emulsion was created.

### Example 20

An emulsion of an oil phase based on PIB and an aqueous phase is created according to the first aspect. The oil consists of 96% low molecular weight PIB (Glissopal V190) and 4% isostearic acid. The first aqueous phase to create the multi-layered structure consists of 5% ammonia and 95% water. The second water phase consists of 100% water.

A static mixer suitable for viscous liquids according to US 9.636.646 B2 is used. The 4 base type plates for the layer multiplier are shown as figures 3A-D. In this case, the base plates are machined in PMMA via laser cutting, with dimensions half of the dimensions of the mixer described in the examples of US 9.636.646 B2. As in example 1, each subunit or splitter creates 12 new sublayers. The layer multiplier part of the static mixer is assembled by placing 6 splitters in series. The oil phase and the first aqueous phase are fed to his assembly at a flow rate of respectively 50 ml/min and 6.35 ml/min. The second aqueous phase is fed at a flow rate of 1.59 I/min as a single layer perpendicular to the multi-layered structure to form liquid threads of PIB as shown in Figure 2. These threads are broken into droplets by flowing the structure through 3 more splitters. The mean droplet size of the thus obtained emulsion was 8.4 µm.

### Examples 21-22

Following the preparation protocol of examples 5-12, aqueous polyisobutene emulsions with more than 65 wt.% polyisobutene were prepared. Example 21 was prepared at a processing temperature of 23°C. Examples 21 and 22 as shown in table 3, do not contain a wax, oil or resin.

**Table 3 : Composition and average particle size of examples 21-22**

| Example | PIB [wt.%] | Stabilizer [wt.%] | Water [wt.%] | Additive [wt.%] | Mean diameter [µm] |
|---|---|---|---|---|---|
| Example 21 | Glissopal V190 65.5% + Glissopal SA 1.6% | Morpholine-isostearate 4.1% | 28.7% | MBS (biocide) 0.1% | 0.39 |
| Example 22 | Oppanol N50 3.3% + Oppanol B15 62.2% + Glissopal SA 1.6% | Morpholine-isostearate 4.1% | 28.7% | MBS (biocide) 0.1% | 1.22 |

### Examples 23-29

An emulsion based on Glissopal V190 (Polyisobutene, molecular weight of 1000 g/mol), is made with a nonionic surfactant, Lutensol TO8. In a first step, a blend is made from polyisobutene and surfactant. Surfactant is added in an amount of 3.4 % by weight of the polyisobutylene-surfactant-blend. The ratio polyisobutylene/surfactant is fixed, independent of the final water fraction in the emulsion. Different emulsions are made according to Table 4 with various contents of polyisobutylene. Emulsions, total mass 90g, are prepared by the addition of the polyisobutylene-surfactant-blend to the water and subsequent homogenization with a rotor stator device (IKA Ultra Turax T25, S25N-10G dispersing tool, 9500 RPM, 5 minutes mixing).

**Table 4 : Composition and average particle size of examples 23-29**

| | Water (wt%) | Surfactant (wt%) | Polyisobutylene (wt%) | Mean diameter (µm) |
|---|---|---|---|---|
| Example 23 | 50,2% | 1,7% | 48,1% | 27,3 |
| Example 24 | 39,9% | 2,1% | 58,0% | 29,3 |
| Example 25 | 35,0% | 2,2% | 62,7% | 19,2 |
| Example 26 | 29,9% | 2,4% | 67,7% | 18,4 |
| Example 27 | 25,0% | 2,6% | 72,4% | 2,9 |
| Example 28 | 20,0% | 2,8% | 77,2% | 2,4 |
| Example 29 | 15,0% | 2,9% | 82,0% | 1,4 |

Examples 23-29 resulted in polyisobutene-in-water emulsions. Emulsions prepared with less than 10% water following the same procedure inverted to water-in-polyisobutene emulsions during preparation.

### Examples 30-36

Emulsions with a high polyisobutene content were created following the procedure of example 1. However, a different polyisobutene composition was used. Instead of Glissopal V190, a blend of 10% Oppanol B15 (Molecular weight of 85 000 g/mol) in Glissopal V190 is used. Results are summarized in Table 5.

**Table 5 : Composition and average particle size of examples 30-36**

| | Water (wt.%) | Surfactant (wt.%) | Polyisobutene (wt.%) | Mean diameter (µm) |
|---|---|---|---|---|
| Example 30 | 50,1% | 1,5% | 48,3% | 58,4 |
| Example 31 | 39,7% | 1,8% | 58,5% | 49,9 |
| Example 32 | 35,2% | 2,0% | 62,8% | 46,2 |
| Example 33 | 30,0% | 2,2% | 67,8% | 42,4 |
| Example 34 | 24,9% | 2,3% | 72,9% | 26,1 |
| Example 35 | 19,9% | 2,4% | 77,7% | 6,6 |
| Example 36 | 15,2% | 2,8% | 82,1% | 4,7 |

### Examples 37-38

A polyisobutene in water emulsion is made using Glissopal V190 (Molecular weight of 1000 g/mol) and an anionic surfactant. The anionic surfactant consists of a fatty acid, Radiacid 907 from Oleon, and ammonia (amount corresponding to acid number of the fatty acid). In a first step, a blend is made from the fatty acid and the polyisobutylene. The fatty acid is added in an amount of 4% by weight of the polyisobutylene-fatty acid blend. The ratio polyisobutylene/fatty acid is fixed, independent of the final water fraction in the emulsion. Emulsions with different fraction of polyisobutylene are made according to Table 6. The polyisobutylene-fatty acid blend is added to the aqueous phase composed of the water and ammonia. Emulsions are then prepared with a flow-through rotor-stator device (IKA Process Pilot 2000/4 equipped with the colloid mill geometry, flow rate 200 l/h, gap setting 0.25 turn, 8000 RPM, operating temperature of 21°C, batch size 5 kg). After start-up, the emulsions are recycled for 2 min and then collected.

**Table 6 : Composition and average particle size of examples 37-38**

| | Water (wt.%) | Ammonia (25% solution) wt.%) | Fatty acid (wt.%) | Polyisobutene (wt.%) | Mean diameter (µm) |
|---|---|---|---|---|---|
| Example 37 | 36.3% | 0.7% | 2.5% | 60.5% | 15.5 |
| Example 38 | 17.9% | 0.9% | 3.2% | 78.0% | 3.8 |

### Examples 39-40

The procedure of example 3 was repeated at an operating temperature of 75°C, with a different polyisobutene blend. The polyisobutene blend comprises 50 wt.% by weight of the polyisobutene blend of Oppanol B10 (Molecular weight 40 000 g/mol) and 50 wt.% by weight of the polyisobutene blend of Glissopal V1500 (Molecular weight 2300 g/mol). Results are summarized in Table 7.

**Table 7 : Composition and average particle size of examples 39-40**

| | Water (wt.%) | Ammonia (25% solution) (wt.%) | Fatty acid (wt.%) | Polyisobutylene (wt.%) | Mean diameter (µm) |
|---|---|---|---|---|---|
| Example 39 | 33.8% | 0.8% | 2.6% | 62.8% | 15.1 |
| Example 40 | 20.9% | 0.9% | 3.1% | 75.1% | 6.4 |

### Example 41

A setup was created using 9 splitters as used in example 1, based on the base plates shown in figure 3A, 3B, 3C and 3D. This setup was used to emulsify Glissopal V190 in water. 4 wt.% of stearic acid relative to the PiB phase was added to the PiB. 1 wt.% relative to the aqueous phase was added to the water stream. A flow rate of 4 ml/min of oil and 1 ml/min of water were used, creating an emulsion with 80% oil (PiB and stearic acid) and 20% aqueous phase (water and morpholine) was created.

The morphology was evaluated under a microscope, showing striated flow and water droplets in oil at the exit of the first splitter as well as a fully emulsified solution with oil droplets in water after the ninth splitter. This emulsified solution at the end of the ninth splitter is called a premix. Its morphology showed oil drops of diameters ranging from 10 µm to 500 µm.

In a following setup, a side feed for water was provided along with the premix stream. The water stream could be adjusted up to a water volume fraction of 0.4. The water-premix combination was passed through a single splitter for homogenization. The following flow was forced through 11 mesh elements as shown in figure 5A and 5B, with 11 mesh elements shown in Fig 3A in between. The mesh elements had conical passages with a tapered cross section. The maximum diameter Dmax is 500 µm and the minimum diameter Dmin is 250 µm. The plates are 4 mm thick.

The resulting morphology was analyzed by microscopy, using more than 2000 particles, and by laser diffraction. The average diameter was 3.2 µm with a standard deviation of 1.76 according to microscope analysis. The average diameter obtained by laser diffraction is 3.9 µm. The entire process was carried out at room temperature, without heating any of the fluid streams or the setup itself.

## Claims

1. Method for preparing a polyisobutene (PiB) in water emulsion **characterized by the steps** :
- combining a number of separate fluid streams of PiB and water with formation of alternating fluid lamellae of PiB and water,
- focusing the alternating fluid lamellae of PiB and water with formation of a focused total fluid stream,
- gradually tapering the cross-flow section of said focused total fluid stream in the direction of the flow in a manner that decays said alternating polyisobutene and water fluid lamellae.

2. Method according to claim 1, wherein the following two steps are carried out once or several times :
- gradually tapering the cross-flow section of said focused total fluid stream in the direction of the flow from a first cross-flow section area A₁ to a second cross-flow section A₂, wherein the first cross-flow section area A₁ is larger than the second cross-flow section area A₂, and
- abruptly expanding said second cross-flow section area A₂ to a third cross-flow section area A₃, wherein said third cross-flow section is equal or larger than said second cross flow section area A₂.

3. Method according to any of claims 1-2, wherein said alternating fluid lamellae of PiB and water have an average thickness lower than 100 µm.

4. Method according to any of claims 1-3, wherein a stabilizer is added to at least one polyisobutene and / or water stream.

5. Method according to any of claims 1-4, wherein a first stabilizer is added to at least one water stream, and wherein a second stabilizer is added to at least one polyisobutene stream, wherein the first and the second stabilizer comprise corresponding surface active moieties, preferably said corresponding surface active moieties are an acidic and basic moieties.

6. Method according to any of claims 1-5, wherein at least one polyisobutene stream comprises a fatty acid, preferably stearic acid, more preferably isostearic acid.

7. Method according to any of claims 1-6, wherein at least one water stream comprises a base, preferably morpholine.

8. Method according to any of claims 1-7, wherein each of said separate fluid streams of PiB and water are **characterized by** a dynamic viscosity µ, wherein the ratio of the dynamic viscosity of a PiB stream to the dynamic viscosity of a water stream is higher than 4.0, preferably higher than 10.0, more preferably higher than 100.0.

9. Method according to any of claims 1-8, wherein the cross-flow section is gradually tapered in the direction of the flow from a first cross-flow section area A₁, to a second cross-flow section area A₂, wherein the first cross-flow section area A₁ is between 10.000 and 100.000 µm².

10. Method according to any of claims 1-9, wherein the cross-flow section is gradually tapered in the direction of the flow from a first, cross-flow section area A₁, to a second cross-flow section area A₂, wherein the cross-flow section area A₂ is between 2.500 and 25.000 µm².

11. Method according to any of claims 1-10, wherein the cross-flow section is gradually tapered in the direction of the flow over a length t, wherein t is comprised between 0.5 and 100 mm, preferably between 0.5 and 20 mm, more preferably between 1 and 10 mm.

12. Method according to any of claims 1-11, wherein the process is operated at a temperature lower than 80°C, preferably lower than 50°C.

13. Use of a method according to any of claims 1-12 to obtain a polyisobutene emulsion.

14. Aqueous polyisobutene emulsion comprising :
- polyisobutene,
- at maximum 5 wt.%, based on the total weight of said emulsion based on the total weight of said emulsion, of at least one stabilizer, and
- optionally 1 wt.% to 30 wt.% , based on the total weight of said emulsion, of at least one wax and/or oil,
- complemented with water to 100 wt. %,
**characterized in that** the emulsion comprises 66 wt.% to 95 wt.%, based on the total weight of said emulsion, of polyisobutene.

15. Method for reducing the average droplet diameter of an emulsion, comprising the steps :
- providing an emulsion, comprising droplets of a dispersed phase within a continuous phase, **characterized by** an average droplet diameter and a viscosity ratio of the dispersed phase to said continuous phase of at least 4.0, and
- reducing said average droplet diameter by forcing said emulsion through a gradually tapered cross-flow section of in the direction of the flow in a manner that decays said alternating polyisobutene and water fluid lamellae.
